# EUROPEAN PATENT SPECIFICATION

(11) **EP 0 692 613 B1**
(45) Date of publication and mention of the grant of the patent: **07.10.1998**
(21) Application number: 95109365.7
(22) Date of filing: 16.06.1995
(51) Int. Cl.: F01L 1/08, F01L 1/26, F01L 1/04

(54) **Internal combustion engine and method for supplying air into a combustion chamber of an internal combustion engine**
Brennkraftmaschine und Verfahren zum Zuführen von Luft zum Brennraum einer Brennkraftmaschine
Moteur à combustion interne et méthode d'alimentation en air de la chambre de combustion d'un moteur à combustion interne

(30) Priority: 17.06.1994 JP 136032/94
(43) Date of publication of application: 17.01.1996
(73) Proprietor: YAMAHA HATSUDOKI KABUSHIKI KAISHA, Iwata-shi Shizuoka-ken, 438 (JP)
(72) Inventor: Tsuzuku, Hiroyuki, Iwata-shi, Shizuoka-ken, 438 (JP); Saito, Tetsushi, Iwata-shi, Shizuoka-ken, 438 (JP); Tsuchida, Naoki, Iwata-shi, Shizuoka-ken, 438 (JP)
(74) Representative: Grünecker, Kinkeldey, Stockmair & Schwanhäusser Anwaltssozietät

(56) References cited:
- EP-A- 0 340 834
- EP-A- 0 444 562
- EP-A- 0 601 570
- AU-A- 6 528 774
- DE-A- 3 609 693
- FR-A- 1 035 893
- GB-A- 2 275 096
- PATENT ABSTRACTS OF JAPAN vol. 95 no. 0005,16 May 1995 & JP-A-07 127403

## Description

The present invention relates to an internal combustion engine comprising a cylinder unit with a piston received therein to define a combustion chamber, an intake and exhaust passage arrangement for supplying air to said combustion chamber and discharging combustion gas therefrom, respectively, at least one intake valve and one exhaust valve for controlling the flow through said intake and exhaust passage arrangement respectively, and a valve operating mechanism for operating said valves in response to a crankshaft rotational position, each of said valves being movable into an opened position for a predetermined period interval corresponding to a predetermined crankshaft rotational angle interval in accordance with a predetermined valve lift curve, wherein said valves reach their maximally opened position prior to or after the middle of said crankshaft rotational angle interval in accordance with a continuously changing asymmetrical valve lift curve.

And further, the present invention relates to a method for supplying air into a combustion chamber of an intemal combustion engine and discharging combustion gas therefrom, wherein said air is supplied and said combustion gas is discharged through passages communicated with said combustion chamber during predetermined intervals corresponding to predetermined crankshaft rotational angle intervals in which an intake valve and an exhaust valve, respectively, are opened in accordance with prescribed valve lift curves for controlling the flow of intake air and combustion gas through the respective passage, the intake air and/or the combustion gas being supplied and discharged respectively in accordance with a continuously changing asymmetrical valve lift curve according to which the intake valve and the exhaust valve are moved into their maximal opening position prior to or after the middle of said crankshaft angle interval.

An internal combustion engine and a method as mentioned above are known from EP-A-340 834. This document teaches a valve actuation mechanism wherein two types of intake cams different in shape are used in the same engine. A cam ground to a special shape is known from AU-A-65287/74 wherein the duration of the exhaust cams is 145° while the opening side rotates 100°.

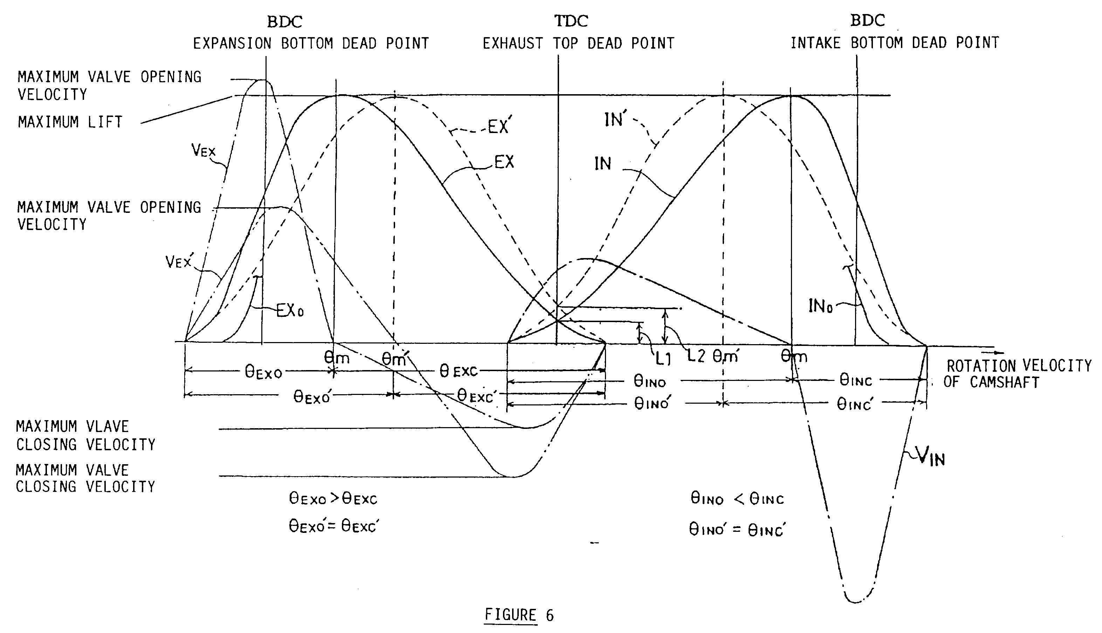

Dynamic valve devices for engines open and close the air intake and exhaust valves according to a prescribed lift curve. This lift curve shows the relationship between the amount of lifting for the air intake and exhaust valves with respect to the angle of rotation of the crankshaft (angle of rotation for the camshaft). The one shown by the broken line in Figure 6 is typical of the prior art. In the Figure, the rotation angle of the camshaft is shown on the horizontal axis and the amount of lift and the valve velocity for the air intake and exhaust valves are shown on the vertical axis. The lift curve EX' for the exhaust valve, and the lift curve for the air intake valve IN' of the prior art are both symmetrical on either side of the maximum lifting cam angle θm'. Further, the cam angle θ_{EXO}' on the open side for the exhaust valve = the cam angle θ_{EXC}' on the closed side for the exhaust valve, and the cam angle θ_{INO}' on the open side for the air intake valve = the cam angle θ_{INC}' on the closed side for the air intake valve. Thus, in dynamic valve devices of the prior art, these lift curves EX' and IN' show that both the air intake and exhaust valves have their maximum aperture centered in the valve opening interval. In addition, the average valve velocity on the opening and the closing side are designed to be the same.

It is necessary to improve filling efficiency in order to improve engine output, and increasing the size of the valve opening or the valve lift are effective means of doing so. However, the space restrictions imposed by the diameter of the cylinder bore limits the space available for the valve openings. Accordingly, if the air intake valve openings were enlarged, then the size of the exhaust valve openings would have to be reduced, thereby creating concern over lowered exhaust efficiency. Also, if the amount of lifting were increased too much, a great deal of space would be required for a relief area in the crown of the piston that is cut in order to avoid interference between the valve heads of the air intake and exhaust valves during periods of overlap, and this too would be limited by requirements to achieve an adequate compression ratio.

Accordingly it is an objective of the present invention to provide an internal combustion engine having an improved dynamic valve device and a method for supplying air into a combustion chamber of an internal combustion engine, which improve engine output without enlarging the size of the valve openings or increasing the valve lifting as described above, but by means of improving the air intake efficiency and exhaust efficiency, thereby improving the filling efficiency.

According to the present invention, the objective as regards the apparatus aspects thereof is performed in that the intake valve is in its maximally opened position delayed towards the end of the respective predetermined opening interval and that the exhaust valve in its maximally opened position is advanced towards the beginning of the respective pre-determined opening interval.

Furthermore, the above objective is achieved by a method according to claim 18.

The maximum lifting position on the lift curve for the exhaust valves is shifted toward the advance angle side so that during the combustion stroke, the exhaust valve opens to its maximum aperture when the combustion gas pressure is at its maximum, thereby producing a high pressure blowdown. For example, this makes it possible to improve the exhaust efficiency for the combustion gases even when the size of the exhaust port openings has been decreased to avoid interference with the air intake valve openings.

Since the exhaust efficiency is high as described above, by shifting the lift curve for the exhaust valves toward the delay angle side overall, compared with the conventional symmetrical curve, it is possible to delay the timing for the opening of the exhaust valves to the vicinity of the lower dead point (bottom dead center) in the combustion stroke. As a result, it is possible to improve the expansion ratio and to fully use the combustion pressure to act upon the piston, thereby lowering the exhaust gas temperature and decreasing, by that amount, the exhaust loss in the late exhaust.

The lift curve for the air intake valves has been shifted to the delay angle side in order that the opening of the air intakes valves reach their maximum when the piston descends to the vicinity of the lower dead point of the intake stroke, and when the negative pressure in the cylinder bore is at its maximum. Thereby the air intake velocity increases, the inertial effects are enhanced, the air intake volume rises, and the filling efficiency is improved.

Such high air intake efficiency implemented by shifting the air intake lift curve toward the advance angle side compared to conventional symmetrical curves, further makes it possible to quicken the air intake valves' closing timing to the vicinity of the lower dead point in the intake stroke. This arrangement prevents blow-back, especially in low RPM ranges.

In addition, because the lift curve for the maximum lift position of the air intake valve is shifted toward the delay angle side, the air intake valve closes rapidly on the latter half of the lift curve, thereby increasing the pressure amplitude following the closing of the air intake valves in the cylinder in question. The air intake interference is used to improve the filling efficiency of the other cylinders by utilizing the so-called pulsing effect.

Even further, the arrangement shifts the maximum lifting position to the advance angle side on the lift curve for the exhaust valves and shifts the maximum lift position to the delay angle side for the air intake valves, thereby decreasing the amount of lifting by the exhaust valves and the air intake valves during the overlap period at the exhaust upper dead point. As a result it is possible to form the relief areas in the crown of the piston in a way to avoid interference with the air intake and exhaust valves smaller or to eliminate them altogether. Higher compression ratios are thus possible.

According to another preferred embodiment of the invention, the valve operating mechanism comprises a rotatably supported camshaft having a cam lobe for actuating the intake and/or exhaust valve, said cam lobe being provided with a cam surface having a non lifting section corresponding to the closed position of the respective valve and a lifting section corresponding to the opening interval of said valve, said lifting section including an opening portion for moving the valve from its closed position towards its maximal opened position and a closing portion for moving the valve from its maximal opened position to its closed position. Preferably, the opening portion of an exhaust cam lobe for opening the exhaust valve has a smaller curvature than the closing portion of said cam lobe. In contrast, the opening portion of an intake cam lobe for opening the intake valve has preferably a greater curvature than the closing portion of said cam lobe.

The expressions regarding the curvature of the open side area being generally smaller than the closed side area shall have the following meaning. To wit, in this invention, the cam lifting zone means the cam lobe zone continuing from the base circle of the cam to the point of maximum lifting at the cam nose. The curvature of this cam lobe zone is not constant, but continuously changes. Therefore, the curvature being generally smaller is an overall assessment that includes the cases where the localized curvature may be larger. The expressions about the closing side area being generally smaller than the opening side have a similar meaning.

As the average opening velocity of the exhaust valve is designed to be higher than the average closing velocity and as the average closing velocity of the air intake valves are designed to higher than the average opening velocity, the same amount of lift as with conventional symmetrical lift curves can be attained even with an asymmetrical lift curve.

According to yet another preferred embodiment of the invention, the intake and/or exhaust valve are directly actuated by the respective cam lobe by means of a valve lifter, said valve lifter being disposed offset by a certain amount with respect to the associated camshaft when viewed in the camshaft direction. Since the lifter and the camshaft are offset relative to each other so that contact is made by the displaced foregoing lifter with a low curvature area of the foregoing cam lifting zone in a direct drive type valve operation mechanism, the sliding range of contact between the lifter and the cam lifting zone can be broadened without increasing the lifter diameter, in order to raise the valve lifting velocity and provide the required amount of lift.

In another preferred embodiment of the invention, the intake valve and exhaust valve are actuated through a rocker arm each, said rocker arm being swingable supported around an axis and engaged with the cam lobe of the associated camshaft, the cam lobe of the camshaft and the associated contact surface of the rocker arm being in shape and being positioned relative to each other preferably such that the contact point between the cam lobe and the rocker arm moves on the contact surface of the rocker arm towards and away from the swing axis of said rocker arm when rotating the camshaft. Accordingly, the lever ratio on the open side of the exhaust valve can be increased to increase its opening velocity, or the lever ratio on the closed side of the air intake valve can be increased to increase the closing velocity thereof.

According to the present invention the above mentioned objective as regards the method aspects thereof is performed in that the intake air and/or the combustion gas is supplied and discharged respectively in accordance with an asymmetrical valve lift curve according to which the intake valve and/or the exhaust valve is moved into its maximal opened position prior to or after the middle of said crankshaft angle interval.

According to a preferred embodiment, the intake valve is moved into its maximal opened position when the intake air is sucked into the combustion chamber when the maximal negative pressure prevails in said combustion chamber during said predetermined crankshaft angle interval, while the exhaust valve is moved into its maximal opened position for discharging the combustion gas when the maximal combustion gas pressure prevails in said combustion chamber during the respective opening period.

Further preferred embodiments of the present invention are laid down in further dependent claims.

Hereinafter, the present invention is explained and illustrated in greater detail by means of preferred embodiments of the invention in conjunction with accompanying drawings wherein:
Fig. 1, is a front view of an internal combustion engine equipped with a dynamic valve device according to a first embodiment of the present invention,
Figure 2 is a front sectional view of the foregoing first embodiment
Figure 3 is a side sectional view showing the exhaust side of the foregoing first embodiment.
Figure 4 is a sectional top view showing the valve openings of the foregoing first embodiment.
Figure 5 is a diagram showing the exhaust cam lifting zone of the foregoing first embodiment.
Figure 6 shows the lift curve for the foregoing first embodiment.
Figure 7 is a front sectional view showing a modification of the exhaust valve area of the foregoing first embodiment.
Figure 8 is a front sectional view showing another modification of the exhaust valve area of the foregoing first embodiment.
Figure 9 is a graph of the lift curve for the case when a variable valve timing mechanism has been added to the foregoing first embodiment.
Figure 10 is a diagram showing a modified example of the camshaft, lifter and valve offset positioning of the foregoing first embodiment.
Figure 11 is a front sectional view of a second embodiment
Figure 12 is a top view of the foregoing second embodiment.
Figure 13 is a diagram of the cam lifting zone of the foregoing second embodiment.
Figure 14 is a graph of rocker angular acceleration vs. valve acceleration characteristics for the foregoing second embodiment.
Figure 15 is a graph of cam lifting zone curvature radius vs. rocker angular acceleration characteristics for the foregoing second embodiment.
Figure 16 contains graphs showing the relationship of cam angle to valve lift, valve velocity, and valve acceleration for the foregoing second embodiment.
Figure 17 is a diagram showing a modification of the foregoing second embodiment.

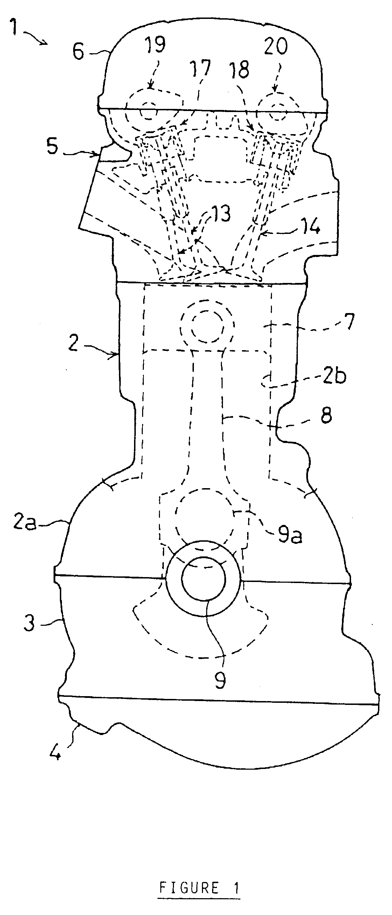

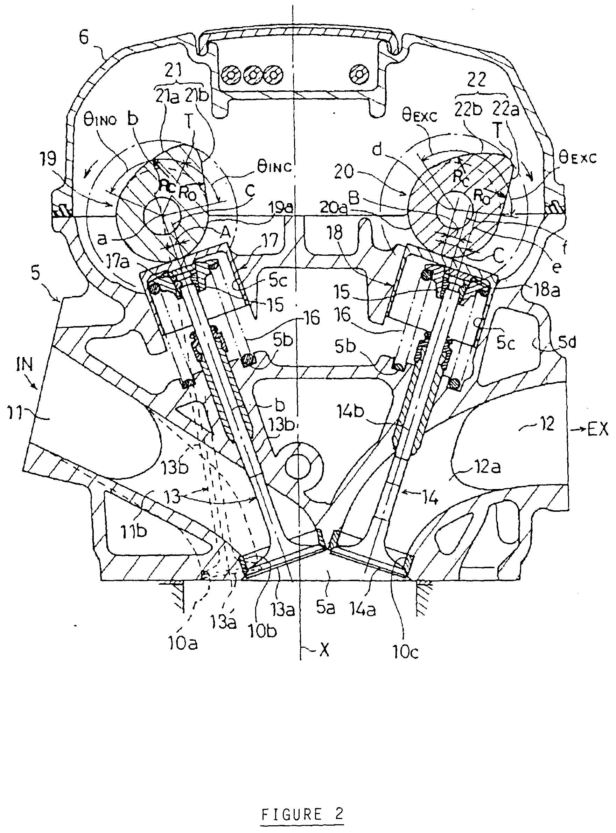

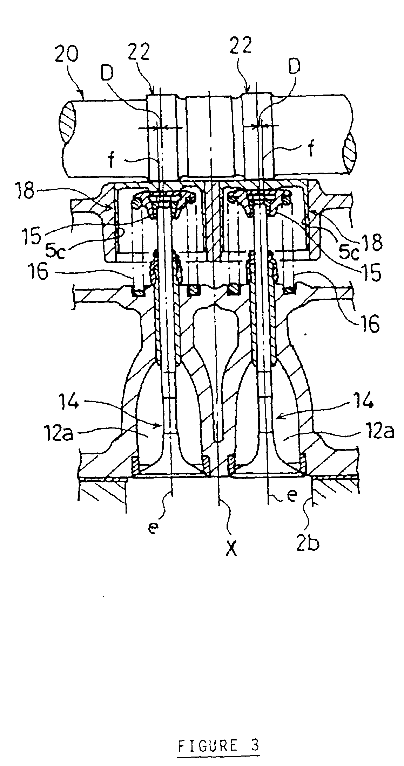

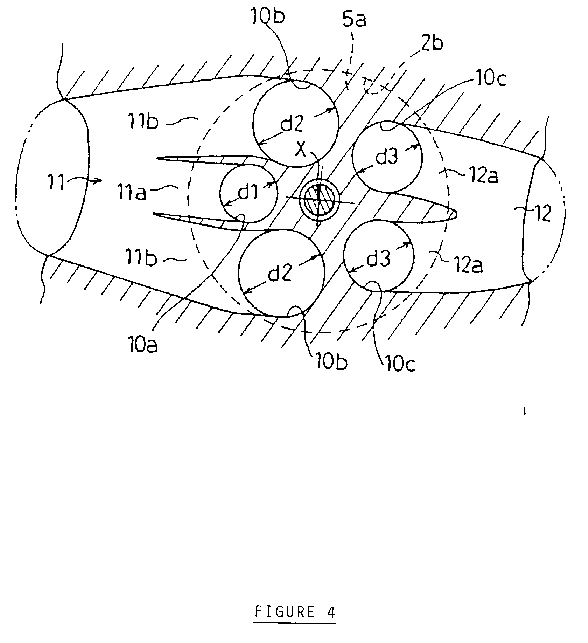

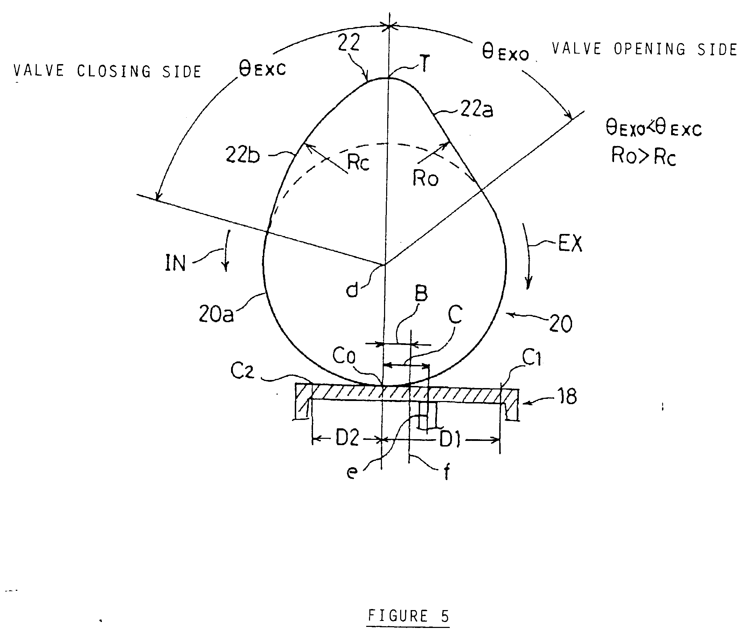

Figures 1 through 6 will be used to describe a first embodiment (first example) of the dynamic valve device for engines according to this invention. Figure 1 is a front view of the engine of this embodiment; Figure 2 is a sectional front view of the dynamic valve device; Figure 3 is a sectional side view of the exhaust valve area; Figure 4 is a sectional top view showing the valve openings; Figure 5 is a diagram showing the exhaust cam lifting zone, and Figure 6 is a lift curve.

In the Figures, 1 represents a water-cooled, four-cycle, four cylinder, five-valve engine. A crankcase 3 and an oil pan 4 are attached to the lower surface of the skirt area 2a of the cylinder block 2 of the engine 1; the cylinder head 5 is attached to the top surface of the cylinder block 2 by means of head bolts, and a head cover 6 is additionally attached to the upper surface of said cylinder heat 5.

Pistons 7 have been slidably inserted into each of the cylinder bores 2b in the foregoing in-line cylinder block 2. Said pistons 7 are linked to the crank pins 9b of the crankshaft 9 by connecting rods 8. This crankshaft 9 extends perpendicularly with respect to the foregoing cylinder bores 2b.

Concave combustion surfaces 5a have been formed in the above mentioned cylinder head 5 on the side that mates with the cylinder block. As shown in Figure 4, a center air intake valve opening 10a is present in said concave combustion area which is located on a line perpendicular to the axis of the cylinder bore 2b and parallel to the crankshaft 9, and two side air intake openings 10b, 10b are positioned on the left and right sides for a total of three air intake valve openings. In addition, there are two exhaust valve openings 10c, 10c which are positioned adjacent to the foregoing side air intake openings 10b, 10b.

Here, the foregoing center air intake valve opening 10a, the side air intake valve openings 10b, and the exhaust valve openings 10c are located approximately tangentially to the inside circumferential surface of the foregoing cylinder bore 2b. In addition, the diameters d1, d2, d3 of the foregoing valve openings 10a, 10b, and 10c are designed so that d2 > d3 > d1.

The following is the reason why the diameters of the foregoing valve openings 10a-10c were chosen to assume the above described relationship. To wit, with the objective of providing as much air as possible to the inside of the cylinder bore, when viewed along the camshaft direction, the air is moved toward the bore axis X. In so doing, when viewed in the camshaft direction, the side air intake valve openings 10b, which tilt toward the cylinder bore axis X, are designed to have as large a diameter as possible, while the center air intake opening 10a is of smaller diameter in order to direct it as much as possible toward the bore axis X. Also, to avoid interference, the exhaust valve openings 10c are designed with a smaller diameter than the side air intake valve openings 10b. As will be explained in detail below, any lowered exhaust efficiency that would normally be caused by the smaller diameter of the exhaust valve openings 10c is prevented by the asymmetrical lift curve that characterizes the present invention.

The foregoing center and side air intake valve openings 10a, 10b communicate with the outside by a center air intake port 11a and side air intake ports 11b, respectively, and the confluent air intake port 11 connects these ports 11a, 11b to one side of the cylinder head 5. The foregoing exhaust valve openings are connected to the outside by the exhaust valve ports 12a, and the confluent exhaust port connects to the other side wall of the cylinder head 5.

The foregoing center and side air intake valve openings 10a, 10b are opened and closed by the valve heads 13a, 13a' of the center and side air intake valves 13, 13. The exhaust valve openings 10c are opened and closed by the valve heads 14a of the exhaust valves 14. The valve stems 13b of these air intake valves 13 and the valve stems 14b of these exhaust valves 14 extend outward and upward at prescribed angles.

The upper ends of the foregoing air intake valves 13 and the exhaust valves 14 are removably held by retainers 15. Valve springs 16 are compressed between these retainers 15 and spring seats 5b are formed in the cylinder head 5. These springs exert force on the foregoing valves 13, 14 to keep them normally closed over the foregoing various valve openings 10a-10c.

Attached to the upper end of the foregoing air intake valves 13 are air intake lifters which encompass the tops of the above mentioned retainers 15 and springs 16; additionally, exhaust lifters 18 are attached to the upper end of the foregoing exhaust valves 14 which encompass the tops of the foregoing retainers 15 and valve springs 16. The foregoing air intake and exhaust retainers 17, 18 are slidably held and guided by guide holes 5c formed in the cylinder head 5. These air intake and exhaust lifters 17, 18 are cylindrical in shape with the top ends closed, and shims 17a, 18a are affixed to the inside surface of these top walls that come into contact with the top ends of the foregoing valve shafts 13b, 14b.

Running parallel to the above mentioned crankshaft 9, and above the foregoing air intake lifters 17 and exhaust lifters 18, are the air intake camshaft 19 and the exhaust camshaft 20. Bearing areas formed in the top surface of the cylinder head 5 and in the cam caps affixed thereto rotatably support these camshafts. While not shown in the Figures, gears have been attached to ends of the foregoing air intake camshaft 19 and exhaust camshaft 20 which link them together, and one of the camshafts is further linked to the crankshaft by a gear or chain. The interconnections by the above described gears cause the camshafts to rotate in opposite directions: the air intake camshaft 19 rotates in the counter clockwise direction in Figure 2, while the exhaust camshaft 20 rotates in the clockwise direction in Figure 2.

In this embodiment, the positional relationships among the foregoing air intake and exhaust valves 13, 14; the air intake and exhaust lifters 17, 18; and the air intake and exhaust camshafts 19, 10; as well as the shape (cam profile) of the air intake and exhaust cam lifting zones 21, 22 are characteristic so these features will now be described in further detail.

As shown in Figure 2, when the air intake lifter 17 is viewed along the camshaft direction, its axial line *c* is parallel to the axis *b* of the air intake valve; and, with respect to the air intake camshaft 19, it has been offset toward the cylinder bore axis X by the amount A, shown by the perpendicular between them. In addition, the air intake camshaft 19, and the center and side air intake valves 13, 13 are positioned so that the camshaft axis *a* intersects the air intake valve axes *b*.

As shown in Figure 2, when the exhaust lifter 18 is viewed along the camshaft direction, its axial line *d* is parallel to the axis *e* of the exhaust valve 14; and with respect to the exhaust camshaft 20, it has been offset toward the cylinder bore axis X by the amount B, shown by the perpendicular between them.

Relative to the exhaust camshaft 20, the exhaust valve 14 has been positioned on the opposite side from the cylinder bore axis X by the amount C shown by the perpendicular to the exhaust lifter 18. This offset C is designed to be greater than the offset B of the above mentioned lifter 18.

Further, when viewed perpendicularly to the camshaft, as shown in Figure 3, the lifting zone 22 of the exhaust cam is not offset from the exhaust valve 17, but the exhaust lifter 18 has been offset by the amount of D toward the outside. This feature enables securing adequate wall thickness between the lifter guide holes 5c, and further allows the exhaust lifter 18 to rotate around its axis.

In designing the offset position of the exhaust valve 14, the exhaust camshaft 20 and the exhaust lifter 18 from the perspective of obtaining an ideally shaped combustion chamber, the tilt angle and the position of the exhaust valve 14 would first be determined, and then this exhaust valve 14 would preferably be used as the reference in establishing the position for the foregoing exhaust lifter 18 and the exhaust camshaft based upon the above mentioned amounts of offset. Similar considerations would apply to the air intake valve 13. On the other hand, if the position of the exhaust valve 14 is used as the standard (reference), it might not be compatible on occasion with design considerations for the distance between the camshafts or the diameters of the gear wheels between them, in which case it would be possible to use the position of the camshafts as the standard (reference) in determining the position of the exhaust valve 14 and lifter 18. In such a case, there might be problems in the area of heat load distribution with the exhaust lifter being located near the exhaust port side. In this event, a water cooling jacket 5d could be located outside the exhaust lifter 18 in order to effectively reduce the heat load.

In addition, the height of the top surface T of the cam lifting zone 21 of the foregoing air intake camshaft 19 is designed to project from the base circle 19a by an amount corresponding to the maximum lift. This cam projection is composed of the valve opening lifting zone 21a, which is positioned in front with respect to the direction of rotation, and the valve closing lifting zone 21b, which is positioned on the back side with respect to the direction of rotation. The cam profile from these two lifting zones 21a, 21b is asymmetrical. To wit, the curvature radius Rc of the valve closing lifting zone 21b is designed to be larger than the curvature radius Ro of the valve opening lifting zone 21a. In addition, the cam angle θ_{INC} for the valve closing lifting zone 21b is designed to be smaller than the cam angle θ_{INO} for the valve opening lifting zone 21a. As a result, the rotation of the camshaft 19, having a larger cam angle θ_{INO}, the air intake valve 13 opens to its maximum aperture at a lower average opening velocity compared with conventional cams having symmetrical lifting zones, while the rotation through the smaller angle θ_{INC} causes the valve to be closed at a higher average closing velocity than conventionally.

On the other hand, the height of projection of the top surface T on the above mentioned exhaust camshaft 20 of the cam lifting zone 22 from the base circle 20a governs the amount of lift. It is comprised of the valve opening lifting zone 22a which is on the forward side with respect to the direction of rotation of the camshaft, and the valve closing lifting zone 22b which is on the back side with respect to the direction of rotation. The cam profiles of these two lifting zones are asymmetrical. To wit, the curvature radius Ro of the valve opening lifting zone 22a is designed to be larger than the curvature radius Rc of the valve closing lifting zone 22b. Further the cam angle θ_{EXO} of the valve opening lifting zone 22a is designed to be smaller than the cam angle θ_{EXC} for the valve closing lifting zone 22b. The rotation of the camshaft 20 through the smaller cam angle θ_{EXO} causes the exhaust valve 14 to be opened to its maximum aperture at a higher average velocity than obtained with symmetrical conventional cams, and rotation through a larger cam angle θ_{EXC} causes the average closing velocity to be lower than in the conventional case.

In this case, the foregoing valve opening lifting zones 21a, 22a, and the valve closing lifting zones 21b, 22b were comprised of cam lobe areas that continued from base circles 19a, and 20a to the top surface T that comprises the cam nose, wherein the radius of curvature of the cam lobe zone is not constant, but continuously changing. Accordingly, the foregoing curvature radii Rc, Ro are not taken in any localized area, but represent the average curvature radii. Also, the foregoing curvature radius Ro is normally a positive value, but the case for its being a negative value is also included. Considering the case where the curvature radius changes from positive to negative, from an infinitely large positive value to an infinitely large negative value, at first glance, one may not see any continuous nature. The term "curvature" was used in the Scope of Patent Claims of the present application instead of "radius of curvature." Accordingly, when the curvature radius is large, the curvature would be small.

Next, the operational effects of the present embodiment will be described.

First, the operation of the exhaust valve 14 will be described. With the rotation of the crankshaft 9, the exhaust camshaft 20 rotates in a clockwise direction with respect to Figure 2. When piston 7 descends to the vicinity of the lower dead point, then the valve opening lifting zone 22a of the cam lifting zone 22 on the exhaust cam begins to slide against the upper surface of the exhaust lifter 18 at point C1 (see Figure 5) and the exhaust valve 14 begins to open (see lift curve EX in Figure 6). Continuing, the piston 7 begins rising to iniate the exhaust stroke, and the exhaust cam rotates through angle θ_{EXO} from the foregoing valve opening starting position in the lifting zone 22a, causing the top T of the exhaust cam lifting zone 22 to make sliding contact with the top of the lifter surface at point Co, whereupon the exhaust valve 14 is opened to its maximum aperture. With the further rotation of the exhaust camshaft 20, the top surface of the lifter begins to slide against the valve closing lifting zone 22b of the exhaust cam lifting zone 22, and the exhaust valve 14 begins to close. Then, after the exhaust camshaft 20 rotates through angle θ_{EXC} from the beginning of the sliding contact position (Co) in the foregoing valve closing lifting zone 22b, the sliding contact with the base circle 20a begins, with the exhaust valve 14 being fully closed, while the piston 7 begins its descent from the exhaust upper dead point to begin the air intake stroke. In this case, the point of sliding contact on the lifter has moved from C1 to Co over a distance of D1 over the valve opening lifting zone 22a of the exhaust cam lifting zone 22, while over the valve closing lifting zone 22b, the point of sliding contact on the lifter 18 moved from point Co to C2, a distance of D2; here D1 > D2.

Thus, during the exhaust valve 14 opening and closing operation, in the present embodiment, the curvature radius Ro of the valve opening lifting zone 22a of the foregoing exhaust cam lifting zone was designed to be large, in other words, the curvature was designed to be small, and the cam rotation angle θ_{EXO} was chosen to be narrow with the result that the exhaust lift curve EX shows the maximum lift angle θm displaced toward the advance angle side in a asymmetrical manner. By contrast, the prior art exhaust lift curve EX' has a maximum lift angle θm' centered in order to form a symmetrical pattern. Accordingly, the maximum lift angle θm for the exhaust valve 14 in this embodiment is in advance of the maximum lift angle θm' of the prior art, and thereby the maximum aperture is achieved earlier than in the conventional case. In this case, the smaller the cam angle θ_{EXO} of the valve opening lifting zone 22a of the foregoing cam lifting zone 22 , the greater is the advance, and the earlier the maximum aperture is achieved.

In Figure 6, the curve VEX, comprised of the single dot-dash line, shows the velocity change of the exhaust valve 14 in this embodiment, while the double dot-dash line indicates the velocity change of a conventional exhaust valve. As is clear from that Figure for the conventional, symmetrical exhaust lift curve EX', the average and the maximum valve opening and valve closing velocities are equal, and accordingly its velocity curve is symmetrical as well. This embodiment, on the other hand, evinces an average and maximum valve opening velocities that are higher than the valve closing velocity. The result is that even while advancing the angle of the maximum lift, the maximum lift is equivalent to that attained in the prior art.

Next, the operation of the air intake valve 13 will be described. With the rotation of the crankshaft 9, the air intake camshaft 19 rotates counter clockwise with respect to Figure 2. When the piston ascends to the vicinity of the exhaust upper dead point (top dead center), the top surface of the air intake lifter 17 begins to slide against the valve opening lifting zone 21a of the cam lifting zone 21 on the camshaft 19 (see lift curve IN in Figure 6). Next, as the piston 7 begins its descent for the air intake stroke, the air intake camshaft 19 rotates through the angle θ_{INO} from the beginning of the sliding of lifter 17 on the foregoing valve opening lifting zone 21a of the air intake camshaft 19, whereupon the top surface of the lifter makes sliding contact with the top surface T of the cam lifting zone 21. As the air intake camshaft 19 rotates further, the top surface of the lifter 17 begins its sliding contact with the valve closing lifting zone 21b of the cam lifting zone 21, and the air intake valve 13 begins to close. Then, when the camshaft 19 has rotated through angle θ_{INC} from the beginning point of sliding contact with the foregoing valve closing lifting zone, sliding contact begins with the base circle 19a, and the air intake valve 13 is completely closed as the piston 7 passes through the lower air intake dead point and begins it ascent for the compression stroke. The diameters of the above mentioned base circles 20a and 19a have been chosen to allow some clearance between them and the lifter. Accordingly, sliding contact is not made between them in the strictest sense, but the term sliding contact has been used to facilitate the explanation.

In the opening and closing action of the air intake valve 13 described above, in this embodiment, the valve opening lifting zone 21a of the foregoing air intake cam lifting zone 21 has been designed at a smaller curvature radius, in other words a larger curvature, and the cam angle θ_{INO} has been designed to be large, which results in an air intake lift curve IN that is asymmetrical because the maximum lift angle θm is shifted to the delay angle side. In the prior art, the lift curve IN' was such that the maximum lift angle θm' was centered in a symmetrical pattern. As a result, the maximum lift angle θm for the air intake valve 13 in this embodiment is more delayed than the maximum lift angle θm' of the prior art, which means that the achievement of the maximum aperture is delayed compared with the prior art. In this case, the larger the cam angle θ_{INO} for the valve opening lifting zone 21a of the foregoing cam lifting zone 21, the more the shift toward the delay angle side and the more delayed is the reaching of the maximum aperture.

In this embodiment, the exhaust valve opening 10c has been designed to be of comparatively small diameter in order to secure more surface area for the air intake valve openings. The larger the total area of these air intake valve openings, the greater the amount of air that can be introduced. Further, with the increased total opening area of the foregoing air intake valve openings, the two side air intake openings 10b are designed to be larger than the center air intake opening 10a, which means that most of the above described enhanced air intake is introduced from the side air intake valve openings 10b directed toward the cylinder bore axis X when viewed from the camshaft direction. As a result of this large volume of air entering the cylinder bore from approximately the center in the direction of the cylinder bore axis X, the generation of a so-called vertical tumble is thereby facilitated.

When viewed from the camshaft direction, the center air intake valve opening 10a is positioned toward the outside of the cylinder bore so that air which is introduced into the cylinder bore from said center air intake opening 10, tends to form a so-called reverse tumble which can diminish the tumble from the above mentioned side air intake openings 10b. However, in this embodiment, the diameter of the center air intake valve opening 10a has been chosen to be smaller than that of the side air intake openings 10b, which means that a relatively smaller volume of air enters through the center air intake valve opening 10a, thereby inhibiting the formation of the above mentioned reverse tumble. In addition to using a smaller diameter for the center air intake valve opening 10a, it may be positioned to be directed toward the cylinder bore axis X, which tends to make its flow similar to the air intake flows from the side air intake openings 10b, and thereby, to further inhibit reverse tumble.

In order to maximize the total surface area of the air intake valve openings, the relative area of the exhaust valve openings 10c was designed to be smaller, thereby raising possible concerns over diminished exhaust efficiency. To deal with these concerns, this embodiment shifts the maximum lift angle θm in the exhaust lift curve EX toward the advance angle side, so that, during the combustion stroke, the exhaust valve 14 is opened to its maximum aperture when the combustion gas pressure is at its highest, thereby resulting in a high blowdown pressure. Accordingly, even in such cases as the present embodiment wherein the side air intake valve openings 10b have been designed at the large diameter d2, and the diameter d3 of the exhaust valve openings 10c has been chosen to be correspondingly smaller to avoid interference with said air intake valve openings 10b, the combustion gases can be fully expelled and the combustion efficiency maintained. Further, since a high blowdown pressure ensues, the scavenging efficiency increases during overlap, improving filling efficiency that much more.

Since the exhaust efficiency of the present embodiment is high, as described above, the exhaust lift curve EX has been shifted, overall, to the delay angle side when compared to conventional symmetrical curves, thereby delaying the opening timing for the exhaust valve 14 to the vicinity of the expansion lower dead point (see lift curve EXo in Figure 6). So doing increases the expansion ratio so that there is adequate action on the piston by the combustion pressure and lowering the temperature of the exhaust gases so they can be expelled with less exhaust loss.

Also, since the maximum angle θm for the air intake relief curve IN has been shifted toward the delay angle side in this embodiment, the air intake valve 13 opens to its maximum aperture when the negative pressure inside the cylinder bore is at its highest, i.e., when the piston descends to the vicinity of its lower dead point in the air intake stroke. This increases the air intake flow velocity and enhances the inertial effect to increase the amount of air taken in.

Further, since the present embodiment offers the above described high air intake efficiency, compared with the symmetrical conventional air intake lift curves of the prior art, the air intake lift curve IN has been shifted toward the advance angle side overall so that the closing time of the air intake valve 13 has been advanced to the point near the lower dead point on intake (see lift curve IN₀ in Figure 6). Blow-back in low speed operating ranges is thus prevented.

Also, in this embodiment, since the exhaust lift curve's EX maximum lift angle θm has been shifted toward the advance angle side and the air intake lift curve's IN maximum lift angle θm has been shifted toward the delay angle side, during overlap at the exhaust upper dead point, the exhaust valve 14 and the air intake valve 13 experience a lift L1 that is less than the lift L2 of conventional valves. As a result, the relief areas formed in the crown of the piston 7 to avoid interference with the exhaust valves 14 and air intake valves 13 may be smaller or eliminated altogether, thereby making higher compression ratios possible.

As shown in Figure 6, the present embodiment even further provides for the maximum and average valve opening velocities for the exhaust valve to be higher than the maximum and average valve closing velocities, thereby making the exhaust lift curve EX asymmetrical while still allowing about the same amount of lift as the conventional lift curve EX'. Also, as shown in the Figure, the valve opening and valve closing velocities for the air intake valve 13 are the opposite, positive and negative from the exhaust valve's opening and closing symmetry when taking the exhaust upper dead point as the axis of symmetry; therefore, just as with the exhaust valves, the lift curve for the air intake provides about the same amount of valve lift as the conventional symmetrical lift curves.

As in the present embodiment, when the curvature radius Ro for the valve opening lifting zone 22a of the exhaust cam lifting zone 22 is designed to be greater than the curvature radius Rc for the valve closing lifting zone 22b, then, as shown in Figure 5, the point of contact on the surface of the lifter with the valve opening lifting zone 22a moves a great deal from C1 to Co, raising the possible concern of having to make the diameter of the lifter greater than that of conventional lifters, wherein the point of contact just crosses the lifter axis on either side. However, in the present embodiment, on the side of lifter axis *f* where the foregoing valve opening lifting zone 22a rotates from point *d* on the exhaust camshaft 20, in other words on the upstream side of the direction of rotation of the exhaust camshaft 20 (the right side in Figures 2 and 5), the displacement is only the distance B. Therefore, as is apparent from Figure 5, the diameter of the lifter needs only to be slightly larger than the sum of D1 + D2. Thus, it is possible to have the contact point of the cam on the lifter move over a broad area without increasing the diameter of the lifters and accordingly this enables the raising of the valve lift velocity while securing a considerable amount of lift. Incidentally, if the lifter position was not shifted and the equivalent lifter curve were used, the lifter diameter would have to be somewhat larger than 2 x D1.

The points involving the excursion of the cam lifting zone on the lifter for the above exhaust valve 14 are similar to those for the air intake valve 13. The air intake lifter 17 has been offset by the amount of A from the air intake camshaft 19, so that the contact point between the cam lifting zone 21 and the lifter 17 may move within a broad permissible movement range without increasing the diameter of the air intake lifter 17, and the valve lift velocity can be speeded up while still securing the required amount of lift.

In addition, the advancement of the maximum lift position in this embodiment of the exhaust lift curve EX raises the valve opening velocity, and when the exhaust camshaft 20 and exhaust lifter have been offset, when the valve acceleration is high during the initial stage of opening, the contact point between the exhaust cam lifting zone 22 and the exhaust lifter moves outside the axis *f* of exhaust lifter 18 (opposite the cylinder axial line, to the right in Figure 5) which, as a result, increases the bending moment and the shear force on the exhaust lifter, a disadvantage from the perspective of securing adequate lifter strength.

This embodiment addresses this issue by offsetting the axis *e* of exhaust valve 14 even farther to the outside than the axis *f* of the exhaust lifter 18. Accordingly, when the cam lifting zone 22 of the foregoing exhaust cam contacts the lifter 18 outside the axial line *f* of that exhaust lifter 18, the exhaust valve is 14 is positioned directly opposite said contact point to control the above described bending moment and shear force generation, thereby avoiding any drawbacks with respect to the strength of the exhaust lifter 18.

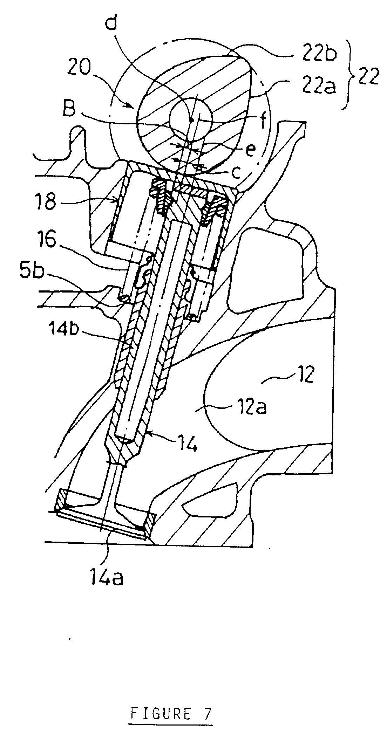

Figure 7 shows a modification of the embodiment which positively avoids the generation of the above described bending moment and shear force. The reference numbers in this Figure that correspond to the ones in Figure 2 represent the same parts. In this modified embodiment, the exhaust valve 14 is offset by dimension C from the exhaust camshaft 20, and in addition, the diameter of the valve shaft 14b of said exhaust valve 14 has been chosen at a value roughly the same as the above described dimension C. This means that over the vast majority of the range of movement of the contact point of the exhaust cam lifting zone 22 with the lifter, exhaust valve stem 14b is providing support directly underneath, thereby positively avoiding any bending moment or shear force generation.

In the foregoing embodiment, the air intake valve 13 has been positioned so that it intersects with the axial line, but to prevent the generation of bending moments, the air intake valve 13, the air intake camshaft, and the air intake lifter may also be offset. In this case, compared with what is shown in Figure 2, the axial line *b* of the air intake valve can be offset farther from the axial line *c* of the air intake lifter 17 toward the axis of the cylinder bore X. This feature inhibits or avoids the generation of bending moments in the air intake lifter 17.

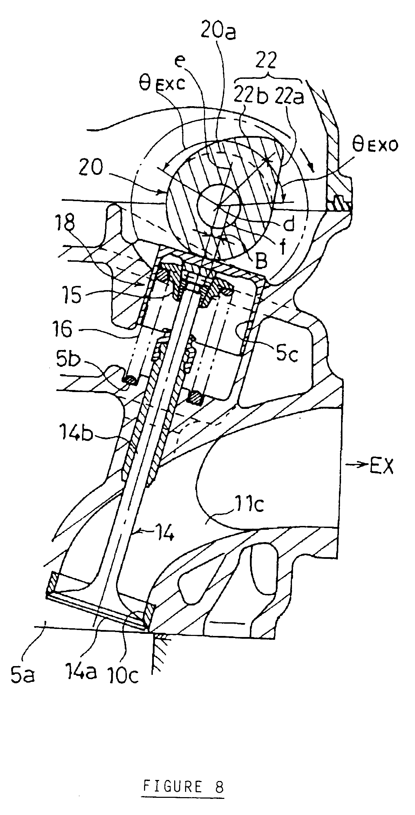

In the above described embodiment, the example involved offsetting the position of the exhaust valve 14 with respect to the exhaust camshaft 20, but this feature is not absolutely necessary from the perspective of just positioning this exhaust valve 14 to enlarge the area over which moves the point of contact between the exhaust cam lifter area and the lifter. As is shown in Figure 8, they can be positioned so that the axes of the exhaust valve and the exhaust cam shaft 20 intersect.

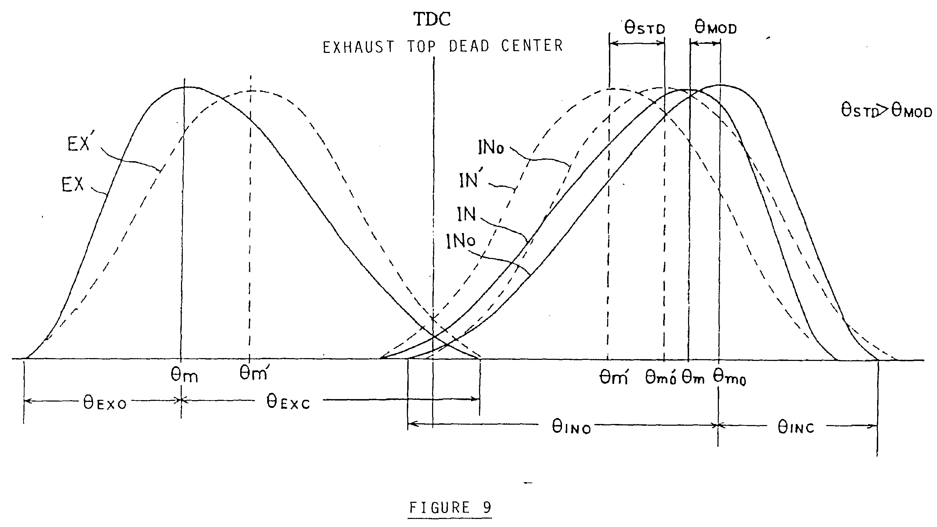

Further, in this embodiment, it is possible to retain the asymmetrical lift curves and advance or delay them in response to the operating condition of the engine to vary the valve opening timing and the valve closing timing. Figure 9 shows an embodiment where the air intake lift curve can be advanced based upon the operating condition of the engine. In the Figure, reference numbers that are the same as in Figure 6 have been applied to corresponding parts.

In the embodiment of Figure 9, the air intake lift curve IN is advanced by angle θ_{MOD} to curve IN when the engine RPM exceeds a certain level. The conventional types of variable valve timing mechanisms can be used to advance or delay the lift curves, for example, to vary the relative angle between a timing gear and the camshaft, as has been widely adopted in the prior art.

Since the foregoing embodiment has an air intake lift curve IN with a maximum lift angle θm which is asymmetrical and more delayed compared with the conventional lift curve IN', the amount of delay angle θ_{MOD} added due to the operating state of the engine is less than is required with conventional symmetrical lift curve IN'. This places a lower load on the foregoing variable timing device.

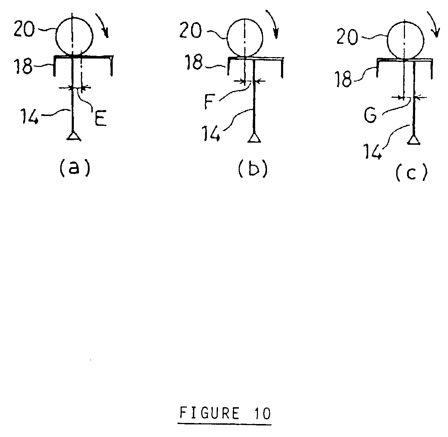

In the foregoing embodiment, it is possible to make a number of different modifications to the offset positioning of the camshafts, lifters, and valve shafts, such as those shown in Figure 10 for the exhaust side. In Figure 10(a), the exhaust camshaft 20 and the exhaust valve 14 have not been offset, but the exhaust lifter has been offset by the dimension E to the outside. In this case, the positions of the camshaft and valve shaft are more advantageous than the conventional positioning, and this arrangement allows very adequate space for the location of the spark plug, and a ideal shape for the combustion chamber. In (b) of the same Figure, both the exhaust lifter 18 and the exhaust valve 14 have been offset toward the outside by F with respect to the exhaust camshaft. In this case, there is plenty of room for the diameter of the valve spring 16. In (c) of the same Figure, only the exhaust valve 14 has been offset by the dimension G; this improves lifter strength.

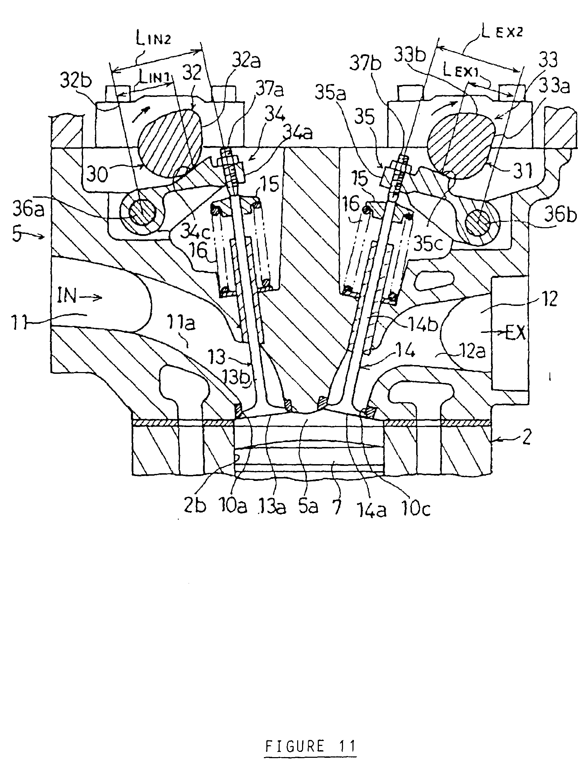

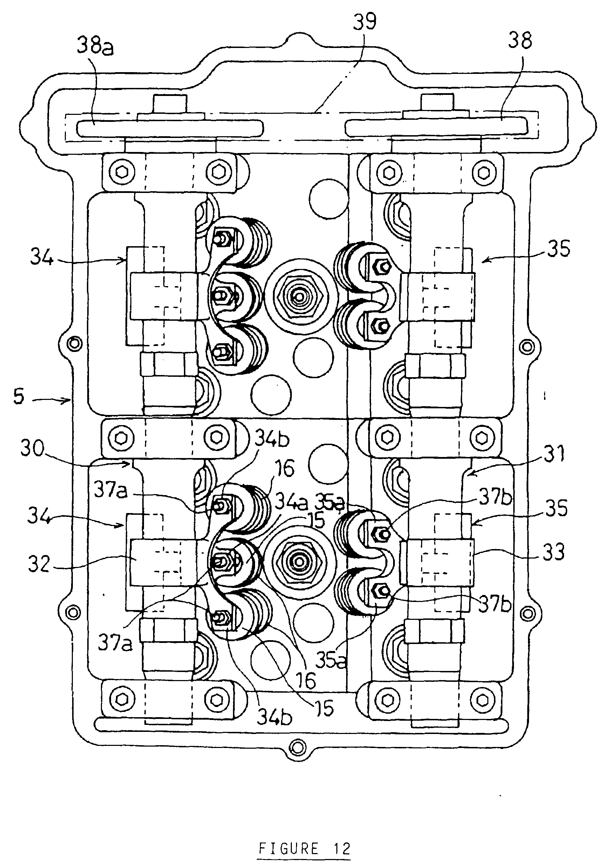

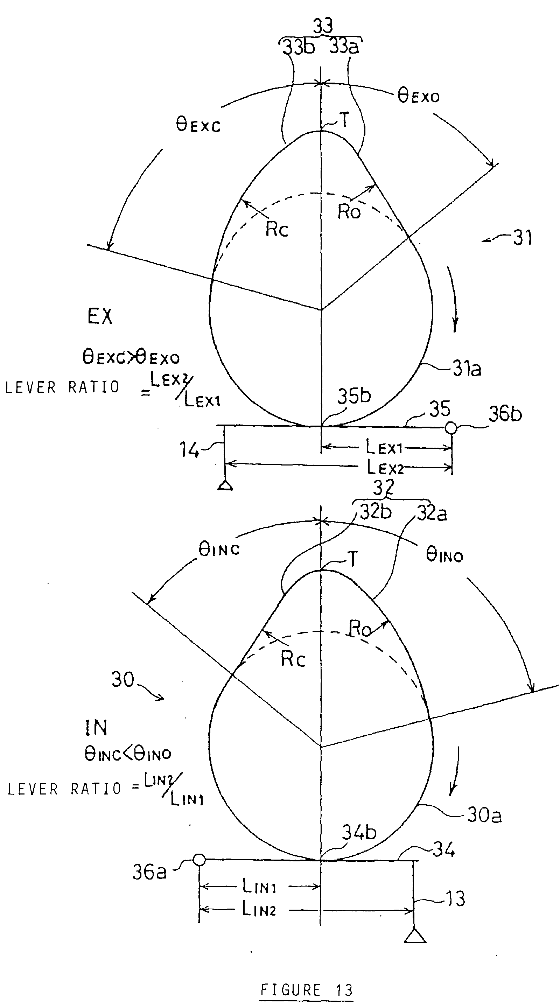

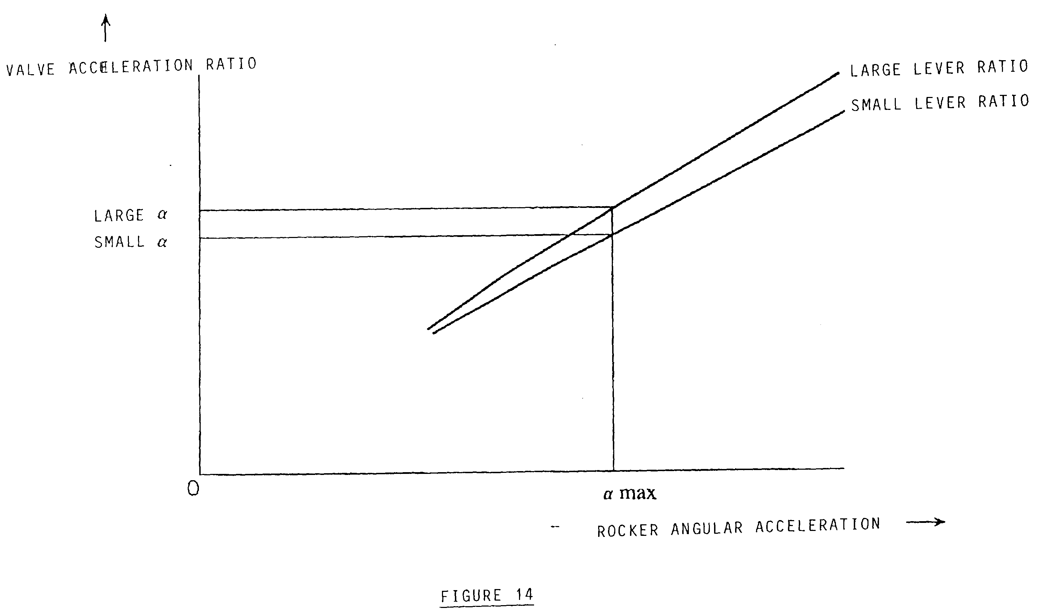

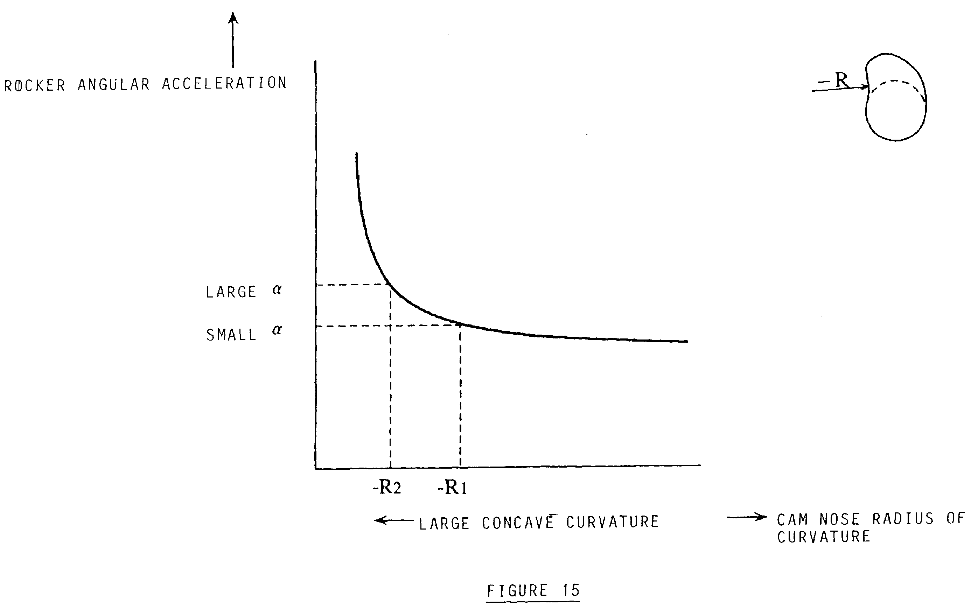

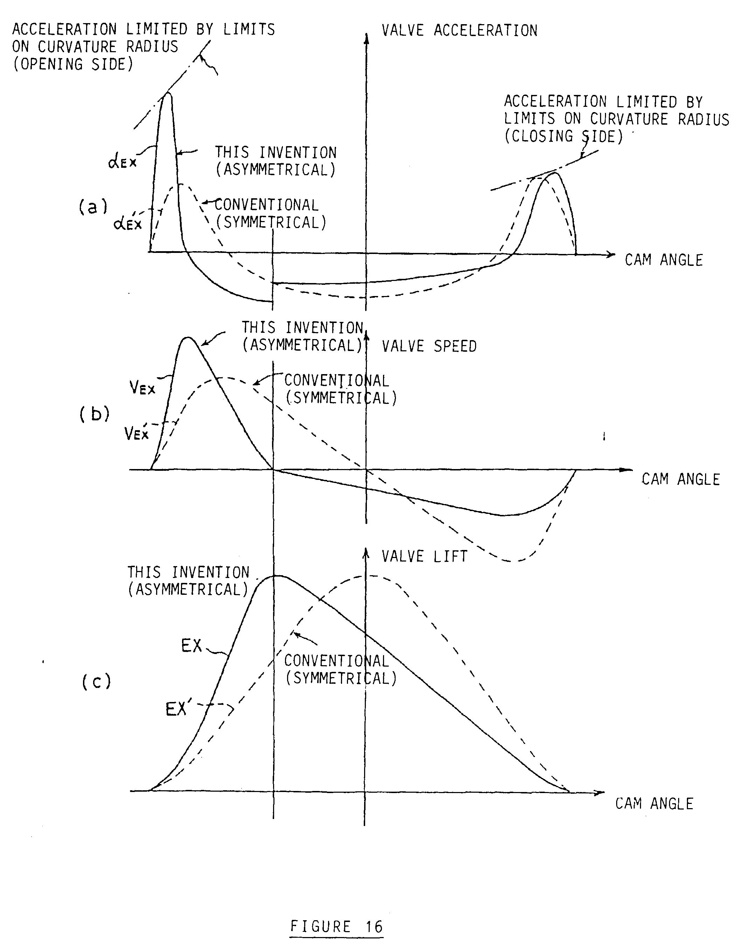

Figures 11 through 16 involve another embodiment (a second embodiment) and they will be used to describe that engine operating unit. Figure 11 is a sectional front view, Figure 12 is a top view, Figure 13 is a diagram showing the shape of the cam lifting zone, Figure 14 is diagram showing the rocker acceleration, valve acceleration and lever ratio characteristics, Figure 15 is a graph showing the relationship between the cam lifting zone curvature radius and the rocker acceleration; Figure 16 shows graphs of the relationship between cam angle and valve lift, speed and acceleration. In the Figures, the reference numbers conform to the same parts in Figures 1 - 10.

This embodiment is an example of a four cycle, two cylinder, five valve engine using a rocker type dynamic valve mechanism. The air intake rocker arm 34 is positioned above the air intake valves 13 and it is supported by a rocker shaft 36a to freely swing up and down. This air intake rocker arm 34 has one center branch 34a and two side branches 34b, 34b, and adjustment bolts 37a threaded into these branch units are in contact with the top ends of the valve shafts 13 of the above mentioned air intake valves 13.

The exhaust rocker arm 35 is located above the exhaust valves 14 and is supported to freely swing up and down by means of the rocker shaft 36b. This exhaust rocker arm 35 has two branch units 35a which hold threaded adjustment bolts 37b that make contact with the top of the valve stems 14b of the foregoing exhaust valves 14.

The air intake camshaft is positioned above the foregoing air intake rocker arm 34 and the exhaust camshaft 31 is positioned above the foregoing exhaust rocker arm 35, and their respective air intake cam lifting zones 32 and exhaust cam lifting zones 33 are in sliding contact with the slide sections 34c, 35c of the air intake and exhaust rocker arms 34, 35. The foregoing air intake camshaft 30 and exhaust camshaft 331 comprise timing sprockets 38a and 38b attached to one end, and these are driven by a timing chain 39 around them. Thus, both of the camshafts rotate in the clockwise direction as shown in Figure 11.

Here, the air intake cam lifting zone 32 on the foregoing air intake camshaft 30 is composed of a valve opening lifting zone 32a and a valve closing lifting zone 32b wherein the curvature radius Ro of the valve opening cam lifting zone 32a is chosen to be smaller than the curvature radius Rc of the valve closing cam lifting zone 32b, while the valve opening cam lifting zone 32a evinces a cam angle θ_{INO} which is greater than the cam angle θ_{INC} of the valve closing cam lifting zone 32b. The curvature of the valve opening cam lifting zone 32a is greater than that of the valve closing cam lifting zone 32b.

Also, the exhaust cam lifting zone 33 of the foregoing exhaust camshaft 31 is composed of a valve opening cam lifting zone 33a and a valve closing cam lifting zone 33b, and the curvature radius Ro for the valve opening cam lifting zone 33a is greater than the curvature radius Rc for the valve closing cam lifting zone 33b, while the valve opening cam lifting zone 33a has a smaller cam angle θ_{EXO} than the valve closing cam lifting zone 33b cam angle θ_{EXC}. The curvature of the valve opening cam lifting zone 33a is less than the curvature of the valve closing cam lifting zone 33a.

Since the rotation of the exhaust camshaft 31 in this embodiment is clockwise as shown in Figure 11, first contact begins between the valve opening cam lifting zone 33a and the slide section 35b of the exhaust rocker arm, causing the exhaust rocker arm to begin swinging downward to begin the opening of the exhaust valve 14, wherein the maximum aperture of the valve is obtained when the top surface T of the cam lifting zone 33 comes into contact with the slide section 35b. Then the slide block 35b begins to slide along the valve closing cam lifting zone 33b, causing reduction in the aperture of the exhaust valve 14, and when the slide section 35b reaches the base circle 31a, the valve is fully closed. In this case, since the curvature radius Ro for the opening cam lifting zone 33a has been designed to be large, the exhaust lift curve EX is asymmetrical and shifted toward the advance angle side, in a manner similar to the exhaust lift curve EX shown in Figure 5.

On the other hand, since the air intake camshaft 30 rotates in the clockwise direction as shown in Figure 11, first the slide section 34b of the air intake rocker arm 34 comes into sliding contact with the valve opening cam lifting zone 32a, causing the air intake rocker arm 34 to descend and the air intake valve 13 to begin to open. As the slide section 34b slides on to the top surface T of the cam lifting zone 32, the valve attains maximum aperture. Then, as the slide section slides further along the valve closing cam lifting zone 32b, the aperture of the air intake valve 13 begins to be reduced, and then fully closes when the slide section 34b makes sliding contact with the base circle 30a. In this case, the valve opening cam lifting zone 32a has a small curvature radius Ro, and accordingly, the maximum lift position is shifted asymmetrically to the delay angle side in a manner similar to that shown by the air intake lift curve IN of Figure 5. Here too, in actual implementation, some clearance has been allowed between the slide sections and the base circles 31a 30a.

Presently the reasons for designing the shape and choosing the direction of rotation described above for both the exhaust camshaft and the air intake camshaft will be explained. As is shown in Figure 16(c), in order to provide an asymmetrical lift curve that provides a lift equivalent to conventional designs, as is shown in (b) of the same Figure, it is necessary to increase the valve opening velocity over the conventional case when the valve is being opened. As shown in (a) of the same Figure, the valve acceleration must be increased to increase valve velocity. In the present embodiment employing the rocker arm type dynamic valve device, in order to increase the valve acceleration, the acceleration of the swinging movement of the rocker arm must be increased (the rocker angular acceleration). If the angular acceleration of the rocker is to be increased beyond a certain level, it is necessary, as shown in Fig. 15, to have a negative curvature radius Ro for the cam lifting zone. What is meant by a negative curvature radius is that the cam lifting zone is concave.

When the curvature radius of the foregoing cam lifting zone is made negative, the degree to which this is possible is limited by the diameter of the polishing stone used in machining the cam lifting zone. In other words, since there isn't good market availability for small diameter stones, the above described concave areas cannot be fabricated on cam lifting zones that are very large. Accordingly, it is impossible to improve the valve acceleration speed beyond a limit that is governed by these restrictions on the curvature radius (see Figure 16(a)).

On the other hand, the above mentioned rocker angular acceleration is proportional to the valve acceleration/lever ratio value. Accordingly, if the lever ratio is increased, it is possible to increase the valve acceleration compared to a lower lever ratio with the same rocker angular acceleration. In other words, the same valve acceleration can be obtained using a lower angular rocker acceleration.

The lever ratios are as shown in Figure 13 with the slide sections being in contact with the base circle: LEX2/LEX1 and LIN2/LIN1, but since the point of slide section contact on the cam lifting zone moves, the foregoing lever ratio changes as well. The closer to the rocker arm swing point of the point of contact, the larger the lever ratio.

A fast rise on the opening side for the exhaust valve 14 being desirable, the direction of rotation of the camshaft must be clockwise in order to begin the contact point between the cam lifting zone and the slide section on the support side for the rocker arm. Thereby the lever ratio for the exhaust valve 14 can be increased on the opening side, even when there are restrictions on the rocker acceleration αmax due to the curvature radius as shown in Figure 14.

On the other hand, it is desirable to increase the closing velocity for the air intake valve on the closing side and to have the contact point between the cam lifting zone and the slide section begin on the side opposite the swing rocker arm, therefore a clockwise rotation direction was selected. Increasing the lever ratio for the air intake valve on the closing side and increasing the closing velocity will be possible as a result.

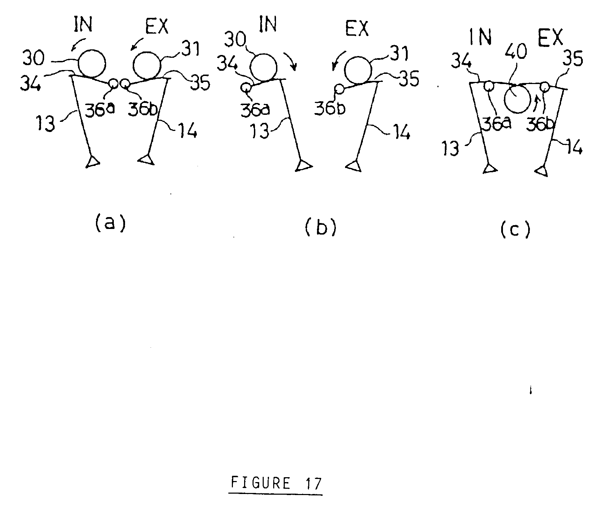

As shown in Figure 17, a number of modifications are possible with respect to the positioning of the foregoing exhaust and air intake camshafts and the direction of their rotation. In all those modified examples, the rotational direction of the camshaft is chosen so that the initial contact between the lifting zone on the exhaust side with the slide section is nearer to the swinging support point. While on the air intake side, the camshaft rotation direction is chosen so that the contact initiates on the side most distant from the swinging support point.

Also, the foregoing embodiment called for three air intake valves and two exhaust valves, but this invention is applicable to any arrangement with a plurality of air intake valves and fewer exhaust valves. For example, there could be 1) two air intake valves and one exhaust valve, 2) three air intake valves and one exhaust valve, 3) four air intake valves and two exhaust valves, or 5) four air intake valves and three exhaust valves, so that the total area of the air intake valve openings is greater than that of the exhaust valve openings, but the expected decline in exhaust efficiency being effectively inhibited.

According to the invention wherein the lift curve is asymmetrical and shifts the maximum lift position to the advance or to the delay angle side, the appropriate selection of the asymmetrical shape allows increased air intake efficiency for the air intake valve openings without increasing the amount of lift, and the exhaust efficiency can be improved as well.

According to the embodiment wherein the maximum lift position is shifted to the advance angle side for the exhaust valve lift curve, a high blowdown pressure is realized by opening the exhaust valve to its maximum aperture at the point where the combustion gas pressure reaches its highest level during the combustion process, thereby improving exhaust efficiency and improving scavenging efficiency during period of overlap.

Due to the realization of the above described high exhaust efficiency, by shifting the exhaust valve lift curve overall toward the delay angle side, it is possible to delay the beginning of the exhaust valve opening to the vicinity of the lower dead point in the combustion stroke, to thereby reduce exhaust loss.

Also, the maximum lift position in the air intake valve lift curve is shifted toward the delay angle side, causing the air intake valve to be at maximum aperture at the point when the negative pressure inside the cylinder bore is at its highest to improve the air inflow velocity and heighten its inertial effect to increase the amount of air intake and the filling efficiency.

Also, since this air intake efficiency has been improved as described, the shifting of the air intake lift curve overall to the delay angle side allows the closing timing for the air intake valve to correspond to the vicinity of the lower dead point of the air intake stroke, and in this case, blowback is effectively prevented, particularly in the low RPM operating ranges.

Also, since the maximum lift position on the air intake lift curve has been shifted toward the delay angle side, the air intake valve closes very rapidly on the back side of the lift curve. The pressure amplitude in the cylinder after the closing of the valves is increased thereby and thus the air intake interference can be utilized to improve the filling efficiency of the other cylinders by means of the so-called pulse effect.

Further, the maximum lift position for the exhaust valve lift curve is shifted to the advance angle side and the maximum lift position of the air intake valve toward the delay angle side and as a result, during periods when there is overlap at the exhaust upper dead point, the lift of both the exhaust valve and the air intake valve can be lessened, enabling the reliefs for the air intake and exhaust valves cut into the crown of the piston to be reduced in size or eliminated altogether, thereby allowing increased compression ratios.

Also, according to the embodiment shown the average valve opening velocity can be designed to differ from the average valve closing velocity, and, moreover the average valve opening velocity for the exhaust valve can be designed to be greater than its average closing velocity, or, the average valve closing velocity for the air intake valves can be designed to be higher than their average opening velocity to generate an asymmetrical lift curve which assures an amount of lift that is equivalent to conventional symmetrical lift curves.

As described offsetting the lifter from the camshaft so that the lifter is shifted toward the contact side between the low curvature area of the foregoing cam lifting zone and the foregoing lifter broadens the area of movement of the contact point between the cam lifting zone and the lifter. As a result, the valve lift velocity can be increased and the required valve lift attained.

Preferably the direction of rotation of the foregoing exhaust camshaft is chosen so that the beginning of the contact between the cam lifting zone and the rocker arm is positioned near the support point for the foregoing rocker arm. In particular, the direction of rotation of the foregoing intake camshaft is chosen so that the beginning of the contact between the cam lifting zone and the rocker arm is positioned on the side most distant from the foregoing rocker arm support point, thereby allowing the lever ratio on the open side for the exhaust valve to be increased to increase its opening velocity, and for the lever ratio on the closing side of the air intake valve to be increased to increase its closing velocity. As a result, the valve lifting velocity can be raised and adequate valve lift can be secured.

## Claims

1. Internal combustion engine comprising a cylinder unit (2,5) with a piston (7) received therein to define a combustion chamber (5a), an intake and exhaust passage arrangement (11,12) for supplying air to said combustion chamber and discharging combustion gas therefrom, respectively, at least one intake valve (13) and one exhaust valve (14) for controlling the flow through said intake and exhaust passage arrangement (11,12) respectively, and a valve operating mechanism (19,20;30,31) for operating said valves in response to a crankshaft rotational position, each of said valves being movable into an opened position for a predetermined period interval corresponding to a predetermined crankshaft rotational angle interval (θ_{INO}; θ_{INC}; θ_{EXO}, θ_{EXC}) in accordance with a predetermined valve lift curve (IN, EX), wherein said valves (13,14) reach their maximally opened position prior to or after the middle of said crankshaft rotational angle interval (θ_{INO}, θ_{INC}; θ_{EXO}, θ_{EXC}) in accordance with a continuously changing asymmetrical valve lift curve (IN, EX), **characterised in that**, the intake valve (13) in its maximally open position is delayed towards the end of the respective predetermined opening interval (θ_{INO}, θ_{INC}) and that the exhaust valve (14) in its maximally opened position is advanced towards the beginning of the respective predetermined opening interval (θ_{EXO}, θ_{EXC}).

2. Internal combustion engine according to claim 1, **characterised in that**, said valve operating mechanism comprises a rotatably supported camshaft (19,20;30,31) having a cam lobe for actuating the intake and/or exhaust valve (13,14), said cam lobe being provided with a cam surface (21,22;32,33) having a non-lifting section (19a,20a;30a,31a) corresponding to the close position of the respective valve (13 or 14) and a lifting section (21a,21b,22a,22b;32a, 32b,33a,33b) corresponding to the opening interval (θ_{INO}; θ_{INC}; θ_{EXO}, θ_{EXC}) of said valve (13 or 14) , said lifting section including an opening portion (21a,22a;32a,33a) for moving the valve (13 or 14) from its closed position towards its maximally opened position and a closing portion (21b,22b;32b;33b) for moving the valve (13 or 14) from its maximally opened position to its closed position.

3. Internal combustion engine according to claim 2, **characterised in that**, the opening portion (22a, 33a) of an exhaust cam lobe for opening the exhaust valve (14) has a smaller curvature than the closing portion (22b, 33b) of said cam lobe.

4. Internal combustion engine according to claim 2 or 3, **characterised in that**, the opening portion (21a,32a) of an intake cam lobe for opening the intake valve (13) has a greater curvature than the closing portion (21b, 32b) of said cam lobe.

5. Internal combustion engine according to at least one of claims 2 to 4, **characterised in that**, an angle (θ_{EXO}) defining the opening portion (22a, 33a) of the exhaust cam lobe is smaller than an angle (θ_{EXC}) defining the closing portion (22b,33b) of said exhaust cam lobe.

6. Internal combustion engine according to at least one of claims 2 to 5 , **characterised in that**, an angle (θ_{INC}) defining the closing portion (21b,32b) of the intake cam lobe is smaller than an angle (θ_{INO}) defining the opening portion (21a,32a) of said intake cam lobe.

7. Internal combustion engine according to at least one of claims 1 to 6, **characterised in that**, an intake camshaft (19;30) is provided for actuating the intake valve (13) and an exhaust camshaft (20;31) is provided for actuating the exhaust valve (14).

8. Internal combustion engine according to at least one of claims 1 to 7, **characterised in that**, the intake valve (13) and/or exhaust valve (14) are directly actuated by the respective cam lobe by means of a valve lifter (17,18) being reciprocatingly movable together with the associated valve (13,14) and engaged with the cam surface (21,22) of said cam lobe, said valve lifter (17,18) being disposed offset by a certain amount (B,A) with respect to the associated camshaft (19,20) when viewed in the camshaft direction.

9. Internal combustion engine according to claim 8, **characterised in that**, the valve lifter (18) associated with the exhaust valve (14) is disposed offset with respect to the associate valve stem (14b) and cam lobe in a direction parallel to the camshaft direction by a predetermined amount (D).

10. Internal combustion engine according to claim 8 or 9, **characterised in that**, the axis of the exhaust valve stem (14b) is disposed offset with respect to the axis of the exhaust camshaft (20) by an amount (C) greater than the amount (B) by which the associated valve lifter (18) is offset.

11. Internal combustion engine according to at least one of claims 1 to 7, **characterised in that**, the intake valve (13) and exhaust valve (14) are actuated through a rocker arm (34,35) each, said rocker arm being swingably supported around an axis and engaged with the cam lobe of the associated camshaft (30,31) and in contact with the valve stem (14b,13b) of the associated valve.

12. Internal combustion engine according to claim 11, **characterised in that**, the cam lobe of the camshaft (30,31) and the associated contact surface (34c,35c) of the rocker arm (34,35) are in shape and are positioned relative to each other such that the contact point between the cam lobe and the rocker arm moves on the contact surface (34c,35c) of the rocker arm (34,35) towards and away from the swing axis of said rocker arm when rotating the camshaft (30,31).

13. Internal combustion engine according to claim 12, **characterised in that**, the contact point between the exhaust rocker arm (35) and the associated exhaust cam lobe at the opening portion (33a) thereof is closer to the swinging axis of the rocker arm (35) than the contact point between the exhaust rocker arm (35) and said cam lobe at the closing portion (33b) thereof.

14. Internal combustion engine according to claim 12 or 13, **characterised in that**, the contact point between the intake rocker arm (34) and the associated intake cam lobe at the opening portion (32a) thereof is more distant from the swinging axis of the rocker arm (34) than the contact point between said intake rocker arm (34) and said cam lobe at the closing portion (32b) thereof.

15. Internal combustion engine according to at least one of claims 1 to 14, **characterised in that**, the maximal lift portion (T) of the intake cam lobe corresponding to the maximal opened position of the intake valve (13) is in contact with the associated valve lifter (17) or rocker arm (34) when the crankshaft rotational angle (θ_{M}) corresponds to the maximal negative pressure in the cylinder bore during said predetermined opening period (θ_{INO}, θ_{INC}).

16. Internal combustion engine according to at least one of claims 1 to 15, **characterised in that**, the maximal lift portion (T) of the exhaust cam lobe corresponding to the maximal open position of the exhaust valve (14) is in contact with the associated valve lifter (18) or rocker arm (35) when the crankshaft rotational angle (θ_{M}) corresponds to the maximal combustion gas pressure in the cylinder bore during the respective opening period (θ_{EXO}, θ_{EXC}).

17. Internal combustion engine according to at least one of claims 1 to 16, **characterised in that**, three intake valves (13) and two exhaust valves (14) are provided per cylinder, said intake valves (13) including two side intake valves and a centre intake valve having a smaller diameter (d1) than said side intake valves (d2) and the exhaust valves having a diameter (d3) greater than said centre intake valve (d1) and smaller than said side intake valves (d2).

18. Method for supplying air into a combustion chamber (5a) of an internal combustion engine (1) and discharging combustion gas therefrom, wherein said air is supplied and said combustion gas is discharged through passages (11,12) communicated with said combustion chamber (5a) during predetermined intervals corresponding to predetermined crankshaft rotational angle intervals (θ_{INO}; θ_{INC}; θ_{EXO}, θ_{EXC}) in which an intake valve (13) and an exhaust valve (14), respectively, are opened in accordance with prescribed valve lift curves (IN, EX) for controlling the flow of intake air and combustion gas through the respective passage, the intake air and/or the combustion gas being supplied and discharged respectively in accordance with a continuously changing asymmetrical valve lift curve (IN, EX) according to which the intake valve (13) and the exhaust valve (14) are moved into their maximal opening position prior to or after the middle of said crankshaft angle interval (θ_{INO}; θ_{INC}; θ_{EXO}, θ_{EXC}), **characterised in that**, the intake valve (13) is moved in its maximally opened position after the middle of said crankshaft angle interval (θ_{INO}, θ_{INC}) towards the end thereof, and that the exhaust valve (14) is moved in its maximally opened position prior to the middle of said crankshaft rotational angle interval (θ_{EXO}, θ_{EXC}), towards the beginning thereof.

19. Method according to claim 18, **characterised in that**, the intake valve (13) is opened slowly and closed rapidly at an average valve closing velocity that is higher than an average valve opening velocity.

20. Method according to claim 18 or 19, **characterised in that**, the exhaust valve (14) is opened rapidly and closed slowly at an average valve closing velocity that is lower than an average valve opening velocity.

21. Method according to at least one of claims 18 to 20, **characterised in that**, the intake valve (13) is moved into its maximally opened position when the intake air is sucked into the combustion chamber (5a) when the maximal negative pressure in said combustion chamber (5a) prevails during said predetermined crankshaft angle interval (θ_{INO}, θ_{INC}) while the exhaust valve (14) is moved into its maximally opened position for discharging the combustion gas when the maximal combustion gas pressure prevails in said combustion chamber (5a) during the respective predetermined interval (θ_{EXO}, θ_{EXC}).

## Patentansprüche

1. Brennkraftmaschine mit einer Zylindereinheit (2, 5), die einen darin aufgenommenen Kolben (7) aufweist, um eine Brennkammer (5a) festzulegen, einer Einlaß- und Auslaß-Kanalanordnung (11, 12), um dieser Brennkammer Luft zuzuführen bzw. Verbrennungsgase daraus abzuleiten, zumindest einem Einlaßventil (13) und einem Auslaßventil (14), um den Fluß durch diese Einlaß- bzw. Auslaß-Kanalanordnung (11,12) zu steuern, sowie mit einem Ventilbetätigungsmechanismus (19, 20; 30, 31) zur Betätigung dieser Ventile in Abhängigkeit von der Drehposition einer Kurbelwelle, wobei jedes dieser Ventile in eine geöffnete Position für eine vorbestimmte Zeitspanne bewegbar ist, die einem vorbestimmten Drehwinkelintervall (θ_{INO}, θ_{INC}; θ_{EXO}, θ_{EXC}) der Kurbelwelle entspricht, und zwar in Abhängigkeit von einer vorbestimmten Ventilhubkurve (IN, EX), worin diese Ventile (13, 14) ihre maximale Öffnungsposition vor oder nach der Mitte des Drehwinkelintervalls (θ_{INO}, θ_{INC}; θ_{EXO}, θ_{EXC}) der Kurbelwelle in Abhängigkeit von einer sich kontinuierlich ändernden, asymmetrischen Ventilhubkurve (IN, EX) erreichen, **dadurch gekennzeichnet,** daß das Einlaßventil (13) in seiner maximalen Öffnungspositon in Richtung auf das Ende des entsprechenden vorbestimmten Öffnungsintervalls (θ_{INO}, θ_{INC}) verzögert ist, und daß das Auslaßventil (14) in seiner maximalen geöffenten Position in Richtung auf den Beginn des entsprechenden vorbestimmten Öffnungsintervalls (θ_{EXO}, θ_{EXC}) angenähert ist.

2. Brennkraftmaschine nach Anspruch 1, **dadurch gekennzeichnet**, daß dieser Ventilbetätigungsmechanismus eine drehbar gelagerte Nockenwelle (19, 20; 30, 31) aufweist, mit einer Nockennase zur Betätigung des Einlaß- und/oder Auslaß-Ventils (13, 14), wobei diese Nockennase mit einer Nockenoberfläche (21, 22; 32, 33) versehen ist mit einem nicht anhebenden Abschnitt (19a, 20a; 30a, 31a), der der geschlossenen Position des entsprechenden Ventils (13 oder 14) entspricht, und mit einem Hubabschnitt (21a, 21b, 22a, 22b; 32a, 32b, 33a, 33b), der dem Öffnungsintervall (θ_{INO}, θ_{INC}, θ_{EXO}, θ_{EXC}) von diesem Ventil (13 oder 14) entspricht, wobei dieser Hubabschnitt einen Öffnungsbereich (21a, 22a; 32a, 33a) zum Bewegen des Ventils (13 oder 14) von seiner geschlossenen Position in Richtung auf seine maximale Öffnungsposition aufweist, sowie einen Schließabschnitt (21b, 22b; 32b, 33b) enthält zum. Bewegen des Ventils (13 oder 14) von seiner maximalen geöffneten Position in seine geschlossene Position.

3. Brennkraftmaschine nach Anspruch 2, **dadurch gekennzeichnet**, daß der Öffnungsbereich (22a, 33a) von einer Auslaß-Nockennase zum Öffnen des Auslaß-ventils (14) eine geringere Krümmung aufweist als der Schließbereich (22b, 33b) von dieser Nockennase.

4. Brennkraftmaschine nach Anspruch 2 oder 3, **dadurch gekennzeichnet**, daß der Öffnungsbereich (21a, 32a) von einer Einlaß-Nockennase zum Öffnen des Einlaßventils (13) eine stärkere Krümmung aufweist als der Schließbereich (21b, 32b) von dieser Nockennase.

5. Brennkraftmaschine nach zumindest einem der Ansprüche 2 bis 4, **dadurch gekennzeichnet,** daß ein Winkel (θ_{EXO}), der den Öffnungsbereich (22a, 33a) der Auslaß-Nockennase festlegt, geringer ist als ein Winkel (θ_{EXC}), der den Schließbereich (22b, 33b) von dieser Auslaß-Nockennase festlegt.

6. Brennkraftmaschine nach zumindest einem der Ansprüche 2 bis 5, **dadurch gekennzeichnet**, daß ein Winkel (θ_{INC}), der den Schließbereich (21b, 32b) der Einlaß-Nockennase festlegt, geringer ist als ein Winkel (θ_{INO}), der den Öffnungsbereich (21a, 32a) von dieser Einlaß-Nockennase festlegt.

7. Brennkraftmaschine nach zumindest einem der Ansprüche 1 bis 6, **dadurch gekennzeichnet,** daß eine Einlaß-Nockenwelle (19; 30) zur Betätigung des Einlaßventils (13) angeordnet ist, und daß eine Auslaß-Nockenwelle (20; 31) zur Betätigung des Auslaßventils (14) vorgesehen ist.

8. Brennkraftmaschine nach zumindest einem der Ansprüche 1 bis 7, **dadurch gekennzeichnet,** daß das Einlaßventil (13) und/oder das Auslaßventil (14) direkt von der entsprechenden Nockennase mittels eines Ventilstößels (17, 18) betätigt werden, die zusammen mit dem zugeordneten Ventil (13, 14) hin und her bewegbar sind und mit der Nockenoberfläche (21, 22) der Nockennase sich in Eingriff befinden, wobei dieser Ventilstößel (17, 18) um einen bestimmten Betrag (B, A) bezüglich der zugeordneten Nockenwelle (19, 20) versetzt ist, wenn in Richtung der Nockenwelle geschaut wird.

9. Brennkraftmaschine nach Anspruch 8, **dadurch gekennzeichnet,** daß der Ventilstößel (18), der dem Auslaßventil (14) zugeordnet ist, bezüglich dem zugeordneten Ventilschaft (14b) und der Nockennase in eine Richtung parallel zu der Nockenwellenrichtung um einen vorbestimmten Betrag (D) versetzt ist.

10. Brennkraftmaschine nach Anspruch 8 oder 9, **dadurch gekennzeichnet,** daß die Achse des Auslaß-Ventilschaftes (14b) bezüglich der Achse der Auslaß-Nockenwelle (20) um einen Betrag (C) versetzt ist, der größer ist als der Betrag (B), um den der zugeordnete Ventilstößel (18) versetzt ist.

11. Brennkraftmaschine nach zumindest einem der Ansprüche 1 bis 7, **dadurch gekennzeichnet,** daß das Einlaßventil (13) und das Auslaßventil (14) über einen Kipphebelarm (34, 35) jeweils betätigt werden, wobei dieser Kipphebelarm um eine Achse verschwenkbar gelagert ist und sich im Eingriff mit der Nockennnase der zugeordneten Nockenwelle (30, 31) sowie in Kontakt mit dem Ventilschaft (14b, 13b) des zugeordneten Ventils befindet.

12. Brennkraftmaschine nach Anspruch 11, **dadurch gekennzeichnet,** daß die Nockennase der Nockenwelle (30, 31) und die zugeordnete Kontaktoberfläche (34c, 35c) des Kipphebelarms (34, 35) bezüglich zueinander derart ausgeformt und positioniert sind, daß der Kontaktpunkt zwischen der Nockennase und dem Kipphebelarm auf der Kontaktoberfläche (34c, 35c) des Kipphebelarms (34, 35) in Richtung auf die Schwenkachse des Kipphebelarmes und von dieser weg sich bewegt, wenn die Nokkenwelle (30, 31) rotiert.

13. Brennkraftmaschine nach Anspruch 12, **dadurch gekennzeichnet,** daß der Kontaktpunkt zwischen dem Auslaß-Kipphebelarm (35) und der zugeordneten Auslaß-Nockennase bei dem Öffnungsbereich (33a) davon näher an der Schwenkachse des Kipphebelarmes (35) liegt, als der Kontaktpunkt zwischen dem Auslaß-Kipphebelarm (35) und dieser Nockennase bei dem Schließbereich (33b) davon.

14. Brennkraftmaschine nach Anspruch 12 oder 13, **dadurch gekennzeichnet,** daß der Kontaktpunkt zwischen dem Einlaß-Kipphebelarm (34) und der zugeordneten Einlaß-Nockennase bei dem Öffnungsbereich (32a) davon weiter von der Schwingachse des Kipphebelarmes (34) enffernt ist als der Kontaktpunkt, der zwischen diesem Einlaß-Kipphebelarm (34) und dieser Nockennase bei dem Schließbereich (32b) davon.

15. Brennkraftmaschine nach zumindest einem der Ansprüche 1 bis 14, **dadurch gekennzeichnet,** daß der maximale Hubabschnitt (T) der Einlaß-Nockennase, der der maximalen geöffneten Position des Einlaßventils (13) entspricht, mit dem zugeordneten Ventilstößel (17) oder dem zugeordneten Kipphebelarm (34) sich in Kontakt befindet, wenn der Kurbelwellendrehwinkel (θ_{M}) dem maximalen Unterdruck in der Zylinderbohrung während dieser vorbestimmten Öffnungsperiode (θ_{INO}, θ_{INC}) entspricht.

16. Brennkraftmaschine nach zumindest einem der Ansprüche 1 bis 15, **dadurch gekennzeichnet,** daß der maximale Hubabschnitt (T) der Auslaß-Nockennase, der der maximalen geöffneten Position des Auslaßventils (14) entspricht, sich in Kontakt mit dem zugeordneten Ventilstößel (18) oder dem zugeordneten Kipphebelarm (35) befindet, wenn der Kurbelwellendrehwinkel (θ_{M}) dem maxialen Verbrennungsgasdruck in der Zylinderbohrung während der entsprechenden Öffnungsperiode (θ_{EXO}, θ_{EXC}) entspricht.

17. Brennkraftmaschine nach zumindest einem der Ansprüche 1 bis 16, **dadurch gekennzeichnet,** daß drei Einlaßventile (13) und zwei Auslaßventile (14) pro Zylinder vorgesehen sind, wobei diese Einlaßventile (13) zwei Seiteneinlaßventile und ein mittiges Einlaßventil mit einem geringeren Durchmesser (d1) als die beiden Seiteneinlaßventile (d2) enthalten, und daß die Auslaßventile einen Durchmesser (d3) aufweisen, der größer ist als derjenige (d1) des mittigen Einlaßventils und kleiner ist als derjenige (d2) der Seiteneinlaßventile.

18. Verfahren zum Zuführen von Luft in eine Brennkammer (5a) einer Brennkraftmaschine (1) und zum Entfernen von Verbrennungsgasen davon, worin diese Luft und diese Verbrennungsgase über Kanäle (11, 12) zugeführt bzw. abgeführt werden, die mit dieser Brennkammer (5a) während vorbestimmten Intervallen kommunizieren, die vorbestimmten Kurbelwellendrehwinkelintervallen (θ_{INO}; θ_{INC}; θ_{EXO}, θ_{EXC}) entsprechen, in welchem ein Einlaßventil (3) bzw. ein Auslaßventil (14) in Abhängigkeit von vorgeschriebenen Ventilhubkurven (IN, EX) zur Steuerung des Flusses der Ansaugluft und des Flusses der Verbrennungsgase durch den entsprechenden Kanal geöffnet sind, wobei die Ansaugluft und/oder das Verbrennungsgas in Abhängigkeit von einer sich kontinuierlich ändernden, asymmetrischen Ventilhubkurve (IN, EX) zugeführt bzw. abgeführt wird, wobei in Abhängigkeit von dieser Ventilhubkurve (IN, EX) das Einlaßventil (13) und das Auslaßventil (14) in ihrer entsprechenden maximalen geöffneten Positionen vor oder nach der Mitte von diesem Kurbelwellenwinkelintervall (θ_{INO}, θ_{INC}, θ_{EXO}, θ_{EXC}) bewegt werden, **dadurch gekennzeichnet,** daß das Einlaßventil (13) in seine maximale geöffnete Position nach der Mitte von diesem Kurbelwellenwinkelintervall ((θ_{INO}, θ_{INC}) in Richtung auf dessen Ende bewegt wird, und daß das Auslaßventil (14) in seiner maximalen geöffneten Position vor der Mitte von diesem Kurbelwellendrehwinkelintervall (θ_{EXO}, θ_{EXC}) in Richtung auf den Anfang davon bewegt wird.

19. Verfahren nach Anspruch 18, **dadurch gekennzeichnet**, daß das Einlaßventil (13) langsam geöffnet und rasch geschlossen wird mit einer durchschnittlichen Ventilschließgeschwindigkeit, die größer ist als eine durchschnittliche Ventilöffnungsgeschwindigkeit.

20. Verfahren nach Anspruch 18 oder 19, **dadurch gekennzeichnet,** daß das Auslaßventil (14) rasch geöffnet und langsam geschlossen wird mit einer durchschnittlichen Ventilschließgeschwindigkeit, die geringer ist als eine durchschnittliche Ventilöffnungsgeschwindigkeit.

21. Verfahren nach zumindest einem der Ansprüche 18 bis 20, **dadurch gekennzeichnet,** daß das Einlaßventil (13) in seine maximal geöffnete Position bewegt wird, wenn die Einlaßluft in die Brennkammer (5a) eingesaugt ist, wenn der maximale Unterdruck in der Brennkammer (5a) während diesem vorbestimmten Kurbelwellenwinkelintervalls (θ_{INO}, θ_{INC}) vorherrscht, während das Auslaßventil (14) in seine maximale geöffnete Position für die Abgabe des Brenngases bewegt wird, wenn die maximale Verbrennungsgastemperatur in dieser Brennkammer (5a) während dem entsprechenden vorbestimmten Intervall (θ_{EXO}, θ_{EXC}) vorherrscht.

## Revendications

1. Moteur à combustion interne comprenant une unité cylindre (2, 5) avec un piston (7) y étant logé, pour définir une chambre de combustion (5a), un agencement de passage d'admission et d'échappement (11, 12) destiné à fournir de l'air à ladite chambre de combustion et à en décharger les gaz de combustion, respectivement, au moins une soupape d'admission (13) et une soupape d'échappement (14) pour commander l'écoulement passant par ledit agencement de passage d'admission et d'échappement (11, 12), respectivement, et un mécanisme d'actionnement de soupape (19, 20; 30, 31), destiné à actionner lesdites soupapes en réponse à la position en rotation du vilebrequin, chacune desdites soupapes étant déplaçable dans une position ouverte pendant un intervalle de temps prédéterminé correspondant à un intervalle angulaire de rotation de vilebrequin (θ_{INO}, θ_{INC}; θ_{EXO}, θ_{EXC}) prédéterminé, conformément à une courbe de levée de soupape (IN, EX), dans lequel lesdites soupapes (13, 14) atteignent leur position d'ouverture maximale avant ou après le milieu dudit intervalle angulaire de rotation de vilebrequin (θ_{INO}, θ_{INC}; θ_{EXO}, θ_{EXC}), conformément à une courbe de levée de soupape (IN, EX) asymétrique présentant une variation continue, caractérisé en ce que la soupape d'admission (13), dans sa position d'ouverture maximale, est retardée par rapport à la fin de l'intervalle d'ouverture (θ_{INO}, θ_{INC}) prédéterminé respectif, et en ce que la soupape d'échappement (14), dans sa position d'ouverture maximale, est temporellement avancée vers le début de l'intervalle d'ouverture (θ_{EXO}, θ_{EXC}) prédéterminé respectif.

2. Moteur à combustion interne selon la revendication 1, caractérisé en ce que ledit mécanisme d'actionnement de soupape comprend un arbre à cames (19, 20; 30, 31) monté à rotation, ayant un lobe de came destiné à actionner la soupape d'admission et/ou d'échappement (13, 14), ledit lobe de came étant doté d'une surface de came (21, 22; 32, 33) ayant une section de non-levée (19a, 20a; 30a, 31a) correspondant à la position fermée de la soupape (13 ou 14) respective et une section de levée (21a, 21b, 22a, 22b; 32a, 32b, 33a, 33b) correspondant à l'intervalle d'ouverture (θ_{INO}, θ_{INC}; θ_{EXO}, θ_{EXC}) de ladite soupape (13 ou 14), ladite section de levée comprenant une partie ouverture (21a, 22a; 32a, 33a) destinée à déplacer la soupape (13 ou 14) de sa position fermée vers sa position d'ouverture maximale et une position de fermeture (21b, 22b; 32b, 33b) destinée la soupape (13 ou 14) de sa position d'ouverture maximale à sa position fermée.

3. Moteur à combustion interne selon la revendication 2, caractérisé en ce que la position d'ouverture (22a, 33a) d'un lobe de came d'échappement destiné à produire l'ouverture de la soupape d'échappement (14) présente une courbure inférieure à celle de la portion de fermeture (22b, 33) dudit lobe de came.

4. Moteur à combustion interne selon la revendication 2 ou 3, caractérisé en ce que la partie ouverture (21a, 32a) d'un lobe de came d'admission destiné à l'ouverture de la soupape d'admission (13) présente une courbure plus grande que la partie fermeture (21b, 32b) dudit lobe de came.

5. Moteur à combustion interne selon au moins l'une des revendications 2 à 4, caractérisé en ce qu'un angle (θ_{EXO}) définissant la partie ouverture (22a, 33a) du lobe de came d'échappement est plus petit que l'angle (θ_{EXC}) définissant la partie fermeture (22b, 33b) dudit lobe de came d'échappement.

6. Moteur à combustion interne selon au moins l'une des revendications 2 à 5, caractérisé en ce qu'un angle (θ_{INC}) définissant la partie fermeture (21b, 32b) du lobe de came d'admission est inférieur à un angle (θ_{EXC}) définissant la partie ouverture (21a, 32a) du lobe de came d'admission.

7. Moteur à combustion interne selon au moins l'une des revendications 1 à 6, caractérisé en ce qu'un arbre à cames d'admission (19; 30) est prévu pour actionner la soupape d'admission (13) et un arbre à cames d'échappement (20; 31) est prévu pour actionner la soupape d'échappement (14).

8. Moteur à combustion interne selon au moins l'une des revendications 1 à 7, caractérisé en ce que la soupape d'admission (13) et/ou la soupape d'échappement (14) sont directement actionnées par le lobe de came respectif, au moyen d'un poussoir de soupape (17, 18) déplaçable en mouvement alternatif, conjointement avec la soupape (13, 14) associée, et mis en prise avec la surface de came (21, 22) dudit lobe de came, ledit poussoir de soupape (17, 18) étant décalé d'une certaine distance (B, A) par rapport à l'arbre à cames (19, 20) associé lorsqu'on observe dans la direction de l'arbre à cames.

9. Moteur à combustion interne selon la revendication 8, caractérisé en ce que le poussoir de soupape (18) associé à la soupape d'échappement (14) est décalé, d'une distance (D) prédéterminée par rapport à la tige de soupape (14b) et au lobe de came associé, dans une direction parallèle à la direction de l'arbre à cames.

10. Moteur à combustion interne selon la revendication 8 ou 9, caractérisé en ce que l'axe de la tige de soupape d'échappement (14b) est décalé, par rapport à l'arbre à cames d'échappement (20), d'une distance (C) supérieure à la distance (B) de laquelle le poussoir de soupape (18) associé est décalé.

11. Moteur à combustion interne selon au moins l'une des revendications 1 à 7, caractérisé en ce que la soupape d'admission et la soupape d'échappement (14) sont actionnées par l'intermédiaire d'un bras basculant (34, 35) pour chacune, ledit bras basculant étant supporté de façon à permettre une oscillation autour d'un axe et vient en prise avec le lobe de came de l'arbre à cames (30, 31) associé et vient en contact avec la tige de soupape (14b, 13b) de la soupape associée.

12. Moteur à combustion interne selon la revendication 11, caractérisé en ce que le lobe de came de l'arbre à cames bras (30, 31) et la surface de contact (34c, 35c) associée du bras basculant (34, 35) ont une forme et une position l'un par rapport à l'autre telles que le point de contact entre le lobe de came et le bras basculant se déplace sur la surface de contact (34c, 35c) du bras basculant (34, 35), en rapprochement et en éloignement vis-à-vis de l'axe d'oscillation dudit bras basculant lors de la rotation de l'arbre à cames (30, 31).

13. Moteur à combustion interne selon la revendication 12, caractérisé en ce que le point de contact entre le bras basculant d'échappement (35) et le lobe de came d'échappement associé, sur la partie ouverture (33a) de celui-ci, est plus près de l'axe d'oscillation du bras basculant (35) que le point de contact entre le bras basculant d'échappement (35) et ledit lobe de came, à la partie fermeture (33b) de celui-ci.

14. Moteur à combustion interne selon la revendication 12 ou 13, caractérisé en ce que le point de contact entre le bras basculant d'admission (34) et le lobe de came d'admission associé, sur la partie ouverture (32a) de celui-ci, est plus éloigné de l'axe d'oscillation du bras basculant (34) que le point de contact entre ledit bras basculant d'admission (34) et ledit lobe de came, sur sa partie fermeture (32b).

15. Moteur à combustion interne selon au moins l'une des revendications 1 à 14, caractérisé en ce que la partie de levée maximale (T) du lobe de came d'admission correspondant à la partie d'ouverture maximale de la soupape d'admission (13) est en contact avec le poussoir de soupape (17) associé ou le bras basculant (34) associé, lorsque l'angle de rotation de vilebrequin (θ_{M}) correspond à la pression négative maximale dans l'alésage de cylindre, durant ladite période d'ouverture (θ_{INO}, θ_{INC}) prédéterminée.

16. Moteur à combustion interne selon au moins l'une des revendications 1 à 15, caractérisé en ce que la partie de levée maximale (T) du lobe de came d'échappement correspondant à la partie d'ouverture maximale de la soupape d'échappement (14) est en contact avec le poussoir de soupape (18) associé ou le bras basculant (35) associé, lorsque l'angle de rotation de vilebrequin (θ_{M}) correspond à la pression de gaz de combustion maximale dans l'alésage de cylindre, durant la période d'ouverture (θ_{EXO}, θ_{EXC}) respective.

17. Moteur à combustion interne selon au moins l'une des revendications 1 à 16, caractérisé en ce que trois soupapes d'admission (13) et deux soupapes d'échappement (14) sont prévues par cylindre, lesdites soupapes d'admission (13) comprenant deux soupapes d'admission latérales et une soupape d'admission centrale ayant un plus petit diamètre (d1) que lesdites soupapes d'admission latérales (d2) et les soupapes d'échappement ayant un diamètre (d3) supérieur à celui de ladite soupape d'admission centrale (d1) et inférieur à celui desdites soupapes d'admission latérales (d2).

18. Procédé d'alimentation en air dans une chambre de combustion (5a) d'un moteur à combustion interne (1) et de décharge des gaz de combustion depuis celle-ci, dans lequel ledit air est fourni et lesdits gaz de combustion sont déchargés en passant par des passages (11, 12) mis en communication avec ladite chambre de combustion (5a), pendant des intervalles de temps prédéterminés correspondant à des intervalles d'angle de rotation de vilebrequin (θ_{INO}, θ_{INC}; θ_{EXO}, θ_{EXC}) prédéterminés, dans lequel une soupape d'admission (13) et une soupape d'échappement (14), respectivement, sont ouvertes selon des courbes de levée de soupape (IN, EX) prescrites dans le but de moduler le débit d'air d'admission et de gaz d'échappement passant par le passage respectif, l'air d'admission et/ou les gaz de combustion étant fournis et déchargés respectivement selon une courbe de levée de soupape (IN, EX) asymétrique, présentant une variation continue, selon laquelle la soupape d'admission (13) et la soupape d'échappement (14) sont déplacées à leur positon d'ouverture maximale avant ou après le milieu dudit intervalle d'angle de vilebrequin (θ_{INO}, θ_{INC}; θ_{EXO}, θ_{EXC}), caractérisé en ce que la soupape d'admission (13) est déplacée à sa positon d'ouverture maximale après ledit milieu de l'intervalle (θ_{INO}, θ_{INC}) en direction de sa fin, et en ce que la soupape d'échappement (14) est déplacée à sa position d'ouverture maximale avant le milieu dudit intervalle d'angle de rotation de vilebrequin (θ_{EXO}, θ_{EXC}) en direction du début de celui-ci.

19. Procédé selon la revendication 18, caractérisé en que la soupape d'admission (13) est ouverte lentement et fermée rapidement, à une vitesse moyenne de fermeture de soupape qui est supérieure à la vitesse moyenne d'ouverture de soupape.

20. Procédé selon la revendication 18 ou 19, caractérisé en que la soupape d'échappement (14) est ouverte rapidement et fermée lentement, à une vitesse moyenne de fermeture de soupape inférieure à une vitesse moyenne d'ouverture de soupape.

21. Procédé selon au moins l'une des revendication 18 à 20, caractérisé en que la soupape d'admission (13) est déplacée à sa position d'ouverture maximale lorsque l'air d'admission est aspiré dans la chambre de combustion (5a), lorsque la pression négative maximale régnant dans ladite chambre de combustion (5a) prévaut durant ledit intervalle d'angle de vilebrequin (θ_{INO}, θ_{INC}) prédéterminé, tandis que la soupape d'échappement (14) est déplacée à sa position d'ouverture maximale pour décharger les gaz de combustion, lorsque la pression de gaz de combustion maximale prévaut dans ladite chambre de combustion (5a) durant ledit intervalle prédéterminé (θ_{EXO}, θ_{EXC}) respectif.
